# EUROPEAN PATENT SPECIFICATION

(11) **EP 2 635 350 B1**
(45) Date of publication and mention of the grant of the patent: **07.03.2018**
(21) Application number: 11838687.9
(22) Date of filing: 01.11.2011
(51) Int. Cl.: A61Q 5/10, A61K 8/41, C09B 23/08

(54) **MODIFIED HYDROCYANINE DYES FOR THE DETECTION OF REACTIVE OXYGEN SPECIES**
VERÄNDERTE HYDROCYANINFARBSTOFFE ZUR ERKENNUNG REAKTIVER SAUERSTOFFSPEZIES
COLORANTS D'HYDROCYANINE MODIFIÉS POUR LA DÉTECTION D'ESPÈCES D'OXYGÈNE RÉACTIF

(30) Priority: 12.11.2010 US 413130 P; 02.11.2010 US 409300 P
(43) Date of publication of application: 11.09.2013
(73) Proprietor: Life Technologies Corporation, Carlsbad, CA 92008 (US)
(72) Inventor: KANG, Hee Chol, Carlsbad California 92008 (US); GEE, Kyle, Carlsbad California 92008 (US); MANDAVILLI, Bhaskar, Carlsbad California 92008 (US); YING, Lai-Qiang, Carlsbad California 92008 (US); BRANCHAUD, Bruce, Carlsbad California 92008 (US)
(74) Representative: Hoffmann Eitle
(86) International application number: PCT/US2011/058806
(87) International publication number: WO 2012/061403

(56) References cited:
- EP-A1- 1 686 157
- WO-A1-2009/121055
- US-A1- 2007 232 805
- US-A1- 2009 239 213
- US-A1- 2009 252 687
- US-A1- 2009 313 769
- Manuel Natali ET AL: "Supplementary Material (ESI) for Electronic Supplementary Information The role of metal ions and counterions in the switching behavior of a carboxylic acid functionalized spiropyran", Dalton Trans., vol. 39 6 August 2010 (2010-08-06), pages 8269-8277, XP055394225, Retrieved from the Internet: URL:http://www.rsc.org/suppdata/dt/c0/c0dt 00242a/c0dt00242a.pdf [retrieved on 2017-07-27]

## Description

### FIELD OF THE INVENTION

The present invention relates to probes useful for detecting reactive oxygen species (ROS), in particular reduced cyanine dye probes, as well as uses of such probes *in vitro* or *in vivo.*

### BACKGROUND OF THE INVENTION

Oxidative stress results from an imbalance between production of reactive oxygen species (ROS) and the ability of cells to scavenge such species. Oxidative stress can be caused by many different pathways, intrinsic and extrinsic, mediated either by mitochondrial respiration or by membrane-bound NADPH oxidases. ROS play an important role in the progression of several diseases including, but not limited to, inflammation, atherosclerosis, aging and age-related degenerative disorders. Probes that can detect ROS in serum samples, live tissue explants, cell cultures, and *in vivo* have potential uses for medical diagnostics and research tools for the diagnoses of diseases characterized by increased ROS production (1-6).

Imaging enables multiplex analysis, localization and quantitation of different parameters related to cytotoxicity and cell death in the same cell. Thus, detection of ROS by conventional fluorescence microscopy, fluorescence spectroscopy, flow cytometry, and/or high content imaging is likely to be advantageous over other techniques. Fluorescent sensors for superoxide and the hydroxyl radical, such as dihydroethydium (DHE), have been used as ROS probes. However, DHE has limited applicability due to its spontaneous auto-oxidation, rapid photobleaching, high toxicity, and multiple reaction products with ROS (7-8). Furthermore, the lower emission wavelength of DHE makes its use *in vivo* problematic. Dihydrorhodamine (DHR), another reduced dye that has been investigated for detection of ROS (9), suffers from high rates of oxidation, thereby limiting its applications. Reduced cyanine dyes developed thus far as probes for ROS, which are based on Cy3/Cy5/Cy7 (10-11), suffer to varying degrees from solubility problems and/or from auto-oxidation. Sulfonate ester-based dyes have also been investigated as ROS probes (12-13). These probes, which typically require multistep synthesis procedures that are time-consuming and expensive, undergo rapid hydrolysis thereby limiting their application.

Thus, there exists a need for probes to detect ROS, amenable to use *in vitro* or *in vivo,* that do not suffer from the limitations of prior art ROS probes, in particular, their tendency to undergo spontaneous auto-oxidation catalyzed by oxygen and/or light with concomitant production of high levels of background fluorescence (14-15).

### SUMMARY OF THE INVENTION

Described herein are compounds, compositions, methods, and kits for detecting reactive oxygen species (ROS) by conventional fluorescence microscopy, fluorescence spectroscopy, flow cytometry, and/or high content imaging. The compounds of the present invention are novel reduced dyes, including Cy-based hydrocyanine dyes and Cy-based deuterocyanine dyes, which dyes are probes for detecting ROS and measuring oxidative stress in cells *in vitro* or *in vivo.* These probes are useful in multiplex applications with other live-cell dyes, such as for example, green fluorescent protein (GFP), making them useful to measure multiple biomarkers of cytotoxicity and cell death, and may be used to evaluate ROS generated by various agents including, but not limited to, lipopolysaccharide, menadione, angiotensin II, nefazodone, ionomycin, and glutamate in a variety of live cell models.

The reduced dyes disclosed herein, which are generally membrane permeable and may therefore accumulate in cells, exhibit little or no fluorescence compared to the corresponding oxidized dyes. Upon intracellular reaction with, *i.e.,* detection of, ROS, the reduced dyes disclosed herein are oxidized thereby affording a dye with substantial fluorescence intensity upon exposure to light of sufficient wavelength. The reduced dyes disclosed herein, in combination with, for example, probes for mitochondrial membrane potential, plasma membrane permeability, and/or caspase activation, may also be used to differentiate hepatotoxic compounds from non-toxic compounds. Also described herein are processes for preparing novel reduced dyes, *i.e.,* ROS probes, for use in the disclosed compositions, methods and kits of the present invention.

One embodiment provides a novel reduced dye compound *(i.e.,* an ROS probe) having the structural formula (**I**): 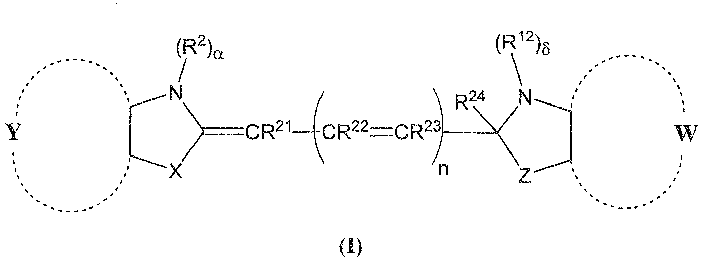 wherein
Y represents the atoms necessary to form one to two fused aromatic rings having 6 atoms in each ring, wherein said Y atoms are selected from the group consisting of -CH, -C, -CR¹, and -N(R²)_{β}, where β is 0 or 1, but no more than one of said atoms in Y is -N(R²)_{β}, and each R¹ is independently amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy;
   α is 1, and α + β = 1 or 2;
W represents the atoms necessary to form one to two fused aromatic rings having 6 atoms in each ring, wherein said W atoms are selected from the group consisting of -CH, -C, -CR^{1'}, and -N(R¹²)_{β'}, where β' is 0 or 1, but no more than one of said atoms in W is - N(R¹²)_{β'}, and each R^{1'} is independently amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy;
   δ is 1, and δ + β' = 1 or 2;
R² and R¹² are independently alkoxycarbonylalkyl, alkoxythiocarbonylalkyl, thioalkoxycarbonylalkyl, alkenoxycarbonylalkyl, alkenoxythiocarbonylalkyl, thioalkenoxycarbonylalkyl, alkoxycarbonylalkenyl, alkoxycarbonylalkenyl, thioalkoxycarbonylalkenyl, each alkyl or alkenyl portion of which is C₁-C₂₂ alkyl or alkenyl that optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, C₂-C₁₂ dialkylamino, or C₃-C₁₈ trialkylammonium;
X is O, S, Se, -CR³R⁴, or -NR⁵, wherein
   R³ and R⁴ are independently C₁-C₂₂ alkyl or C₇-C₂₂ arylalkyl, each alkyl portion of which optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; or R³ and R⁴ taken in combination complete a five- or six-membered saturated or unsaturated ring that is optionally substituted with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; and
   R⁵ is H or C₁-C₂₂ alkyl that is optionally substituted one or more times with hydroxy, carboxy, sulfo, amino, C₁-C₆ alkylamino or C₂-C₁₂ dialkylamino;
Z is O, S, Se, -CR¹³R¹⁴, or -NR¹⁵, wherein
   R¹³ and R¹⁴ are independently C₁-C₂₂ alkyl or C₇-C₂₂ arylalkyl, each alkyl portion of which optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; or R¹³ and R¹⁴ taken in combination complete a five- or six-membered saturated or unsaturated ring that is optionally substituted with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; and
   R¹⁵ is H or C₁-C₂₂ alkyl that is optionally substituted one or more times with hydroxy, carboxy, sulfo, amino, C₁-C₆ alkylamino or C₂-C₁₂ dialkylamino;
each of R²¹, R²², R²³ is independently H, F, Cl, C₁-C₆ alkyl, C₁-C₆ alkoxy, aryl, aryloxy, a nitrogen heterocycle, an iminium ion; or any two adjacent substituents of R²¹, R²², R²³, when taken in combination, form an aryl group or a 4-, 5-, or 6-membered saturated or unsaturated hydrocarbon ring that is optionally substituted one or more times with C₁-C₆ alkyl, halogen, or a carbonyl oxygen; or R²¹ taken in combination with one of R³ and R⁴ forms a six-membered ring that is optionally substituted with C₁-C₆ alkyl; or R²³ adjacent to Z, taken in combination with one of R¹³ and R¹⁴ forms a six-membered ring that is optionally substituted with a C₁-C₆ alkyl;
R²⁴ is H or D in either *R* or *S* configuration; and
n is 0, 1, 2, or 3.

Another embodiment provides a composition for the detection of reactive oxygen species (ROS), the composition comprising:
a) one or more of the reduced dye compounds described herein; and
b) a carrier,
wherein the reduced dye compounds are present in an amount effective to detect the presence of ROS upon reaction with the ROS.

Another embodiment provides a method of detecting reactive oxygen species (ROS) in a sample, the method comprising the steps of:
a) contacting the sample with an effective amount of one or more of the reduced dye compounds described herein or the compositions described herein; and
b) determining if the reduced dye compound has been oxidized.

Another embodiment provides a kit for detecting reactive oxygen species (ROS) in a sample, the kit comprising:
a) one or more of the reduced dye compounds described herein or the compositions described herein; and
b) one or more containers.

Another embodiment provides a process for preparing a reduced dye compound (*i.e.,* an ROS probe) of structural formula (**I**) 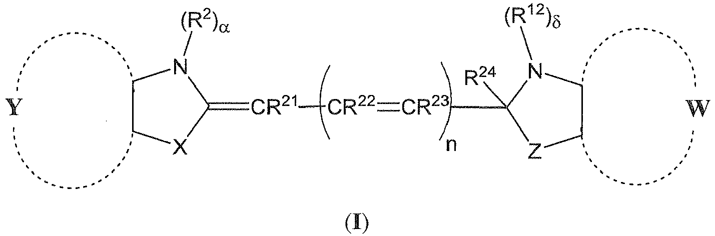 the process comprising:
a) reacting a cyanine dye compound of structural formula (**II**) 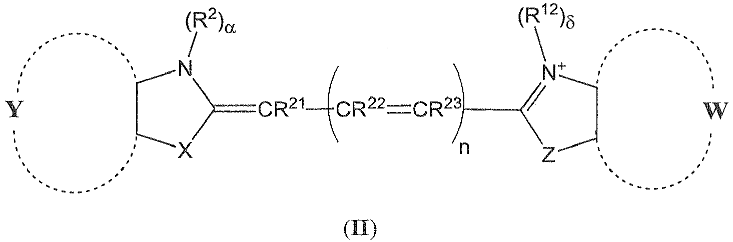 with NaBH₄ or NaBD₄, wherein:
   W, X, Y, Z, R², R¹², R²¹, R²², R²³, R²⁴, n, α, and δ are as defined herein.

Other embodiments and illustrative aspects, features and advantages of the present invention will become apparent from the following detailed description. It should be understood, however, that the detailed description and the specific examples that follow, while indicating preferred embodiments of the invention, are given by way of illustration only.

### BRIEF DESCRIPTION OF THE FIGURES

Figure 1 shows detection of menadione-induced ROS formation in bovine pulmonary arterial endothelial (BPAE) cells with 5 µM Red ROS probe.
Figure 2 shows detection of lipopolysaccharide (LPS)-induced ROS formation in RAW macrophages with 5 µM Red ROS probe.
Figure 3 shows detection of nefazodone-induced ROS formation in HepG2 cells using 5 µM Red ROS probe.
Figure 4 shows flow cytometry results from live Jurkat cells treated with 500 nM PMA, 100 µM Menadione, or control, and stained with 5µM Red ROS probe.
Figure 5 shows results of using Far Red ROS sensor for measurements of cellular oxidative stress.
Figure 6a and Figure 6b show fluorescence microscopy-based detection of oxidative stress in cells using Far Red ROS Sensor.
Figure 7 shows fixability of Far Red ROS Sensor signal in U-2 OS cells.
Figure 8 shows high content imaging of cellular oxidative stress with Far Red ROS Sensor.
Figure 9 shows high content imaging-based quantitation of oxidative stress in HepG2 cells with Far Red ROS Sensor.
Figure 10a and Figure 10b show multiplexed measurements of cytotoxicity and oxidative stress (Figure 10a) and apoptosis and oxidative stress (Figure 10b) in cells.
Figure 11 shows quantitation of Far Red ROS Sensor signal with fluorescence plate reader.
Figure 12 shows detection of TBHP-induced ROS with Orange ROS Probe in U2-OS cells.
Figure 13 shows signal intensities of Orange ROS Probe after 2h at room temperature.

### DETAILED DESCRIPTION OF THE INVENTION

The present invention includes compounds, compositions, methods, and kits for detecting reactive oxygen species (ROS) by conventional fluorescence microscopy, fluorescence spectroscopy, flow cytometry, and/or high content imaging. The compounds disclosed herein are novel reduced dyes, including Cy-based hydrocyanine dyes and Cy-based deuterocyanine dyes, which dyes are probes for detecting ROS and measuring oxidative stress in cells *in vitro* or *in vivo.* The present invention also provides processes for preparing the reduced dyes disclosed herein, *i.e.,* ROS probes, for use in the compositions, methods and kits described herein.

It is to be understood that the present invention is not limited to specific compositions or process steps, as such may vary. It should also be noted that, as used in this specification and the appended claims, the singular form "a", "an" and "the" include plural references unless the context clearly dictates otherwise.

Unless defined otherwise, all technical and scientific terms used herein have the same meaning as commonly understood by one of ordinary skill in the art to which the present invention is related.

As used herein, "reduced dye" refers to a dye molecule in which one or more π-bonds have been reduced, disrupting the extended π-conjugation, resulting in a molecule that exhibits negligible or no fluorescence.

As used herein, "cyanine dye" refers to closed-chain cyanine dyes, *i.e.,* cyanine dyes having end groups that are cyclic moieties, wherein the cyclic moieties may be aromatic or non-aromatic and substituted or unsubstituted at one or more positions.

As used herein, "reduced dye," "reduced cyanine dye," "hydrocyanine," and "deuterocyanine" refer interchangeably and generally to a cyanine dye wherein the iminium cation has been reduced. "Deuterocyanine," as used herein, refers to a cyanine dye that has been reduced by a deuterated reducing agent thus incorporating deuterium into the reduced molecule. Examples of reduced iminium cations are shown below: 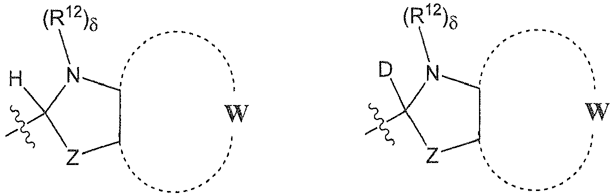 wherein W, Z, R¹², and δ are as defined herein.

As used herein, "reactive oxygen species" and "ROS" refer interchangeably to molecules or ions that contain oxygen ions, free radicals, peroxides, or combinations thereof. Reactive oxygen species may be organic or inorganic. Examples of reactive oxygen species include, but are not limited to, super oxides; free radicals, such as hydroxyl radicals and peroxyl radicals; peroxides, singlet oxygen, ozone, nitrogen monoxide; anions, such as hydroxyl anions and superoxide anions; hypochlorus acid; and
peroxynitrites, as well as combinations of any such reactive oxygen species.

As used herein, "membrane permeable" refers to a molecule that can enter a cell through passive diffusion.

As used herein, "alkylaryl" refers to an alkyl group substituted with an aryl group (e.g., an aromatic group or an heteroaromatic group).

As used herein, "alkyl" refers to a hydrocarbon that is optionally linear or branched, and saturated. Similarly, the alkyl portions of perfluoroalkyl, alkoxy, alkylthio, monoalkylamino, dialkylamino or alkylamido groups are optionally linear or branched, and saturated.

As used herein, "aryl" refers to an aromatic moiety having a single ring or multiple condensed rings each of which is optionally and independently substituted with H, halogen, cyano, azido, sulfonic acid, alkali or ammonium salt of sulfonic acid, carboxylic acid, biologically compatible salt of carboxylic acid, nitro, alkyl, perfluoroalkyl, alkoxy, alkylthio, amino, monoalkylamino, dialkylamino or alkylamido.

As used herein, "heteroaryl" refers to a 5- or 6-membered aromatic heterocycle that is optionally fused to an additional six-membered aromatic ring or to one 5- or 6-membered heteroaromatic ring, said heteroaromatic ring containing 1-3 heteroatoms that are selected from the group consisting of O, N and S in any combination. Any heteroaryl substituent is attached by a single bond, and is optionally and independently substituted one or more times with H, halogen, alkyl having 1-6 carbons, or alkoxy having 1-6 carbons. Selected examples of heteroaryl substituents are pyrrole, thiophene, or furan (single ring, single hetero atom), oxazole, isoxazole, oxadiazole, or imidazole (single ring, multiple hetero atoms). Examples of multi-ring heteroaryl groups include benzoxazole, benzothiazole, benzimidazole (multi-ring, multiple hetero atoms), benzofuran or indole (multi-ring, single hetero atom).

As used herein, "a pharmaceutically acceptable salt" or "a biologically compatible salt" is a counterion that is not toxic as used, and does not have a substantially deleterious effect on biomolecules. Examples of such salts include, among others, K⁺, Na⁺, Cs⁺, Li⁺, Ca⁺⁺, Mg⁺⁺, Cl⁻, AcO⁻, and alkylammonium or alkoxyammonium salts.

As used herein, "alkoxy" refers to the group -O-alkyl wherein alkyl is defined herein. Alkoxy includes, by way of example, methoxy, ethoxy, *n*-propoxy, isopropoxy, *n*-butoxy, *t*-butoxy, *sec*-butoxy, and *n*-pentoxy.

As used herein, "alkenyl" refers to alkenyl groups having from 2 to 22 carbon atoms, preferably 2 to 4 carbon atoms, and having at least I and preferably from 1 to 2 sites of alkenyl unsaturation. Such groups are exemplified, for example, by vinyl, allyl, and but-3-en-1-yl.

As used herein, "alkenoxy" refers to the group -O-alkenyl wherein alkenyl is defined herein. Alkenoxy includes, by way of example, vinyloxy, allyloxy, 1-butenoxy, 2-butenoxy, 2-pentenoxy, 3-pentenoxy, 4-pentenoxy.

As used herein, "heterocycle" or "heterocyclic" or "heterocycloalkyl" or "heterocyclyl" refers to a saturated or unsaturated group having a single ring or multiple condensed rings, including fused bridged and spiro ring systems, from 1 to 10 carbon atoms and from 1 to 4 hetero atoms selected from the group consisting of nitrogen, sulfur or oxygen within the ring wherein, in fused ring systems, one or more the rings may be cycloalkyl, aryl or heteroaryl provided that the point of attachment is through the non-aromatic ring. In one embodiment, the nitrogen and/or sulfur atom(s) of the heterocyclic group are optionally oxidized to provide for the N-oxide, sulfinyl, sulfonyl moieties.

As used herein, "sulfo" refers to sulfonic acid or sulfonate.

As used herein, "halogen" refers to fluorine, chlorine, bromine, or iodine.

As used herein, "Red ROS probe," "Red ROS dye," "Red ROS sensor," and "Far Red ROS sensor" refer interchangeably to a novel reduced dye compound disclosed herein, which compound has a peak excitation and emission at 640nm and 665nm, respectively, and is a probe for detecting reactive oxygen species (ROS) and measuring oxidative stress in cells *in vitro* or *in vivo.*

As used herein, "Orange ROS probe," "Orange ROS dye" and "Orange ROS sensor" refer interchangeably to a novel reduced dye compound disclosed herein, which compound has a peak excitation and emission at 540 nm and 565 nm, respectively, and is a probe for detecting reactive oxygen species (ROS) and measuring oxidative stress in cells *in vitro* or *in vivo.*

As used herein, the term "dye" refers to a compound that emits light to produce an observable detectable signal.

The compounds disclosed herein may exist in unsolvated forms as well as solvated forms, including hydrated forms. These compounds may exist in multiple crystalline or amorphous forms. In general, all physical forms are equivalent for the uses described herein and are intended to be within the scope of the present invention. The compounds disclosed herein may possess asymmetric carbon atoms (*i.e.,* chiral centers) or double bonds; the racemates, diastereomers, geometric isomers and individual isomers of the compounds described herein are within the scope of the present invention. The compounds described herein may be prepared as a single isomer or as a mixture of isomers.

One embodiment provides a novel reduced dye compound (*i.e.,* an ROS probe) having the structural formula (**I**): 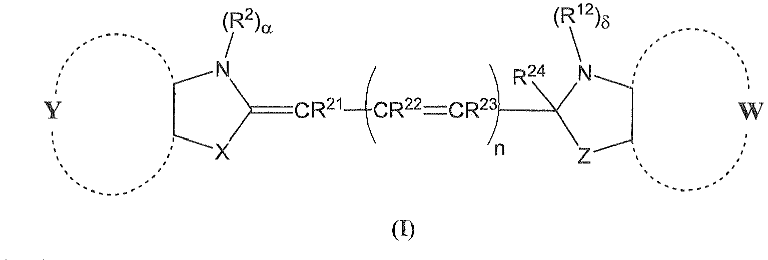 wherein
Y represents the atoms necessary to form one to two fused aromatic rings having 6 atoms in each ring, wherein said Y atoms are selected from the group consisting of -CH, -C, -CR¹, and -N(R²)_{β}, where β is 0 or 1, but no more than one of said atoms in Y is -N(R²)_{β}, and each R¹ is independently amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy;
   α is 1, and α + β = 1 or 2;
W represents the atoms necessary to form one to two fused aromatic rings having 6 atoms in each ring, wherein said W atoms are selected from the group consisting of -CH, -C, -CR^{1'}, and -N(R¹²)_{β'}, where β' is 0 or 1, but no more than one of said atoms in W is - N(R¹²)_{β'}, and each R^{1'} is independently amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy;
   δ is 1, and δ + β' = 1 or 2;
R² and R¹² are independently alkoxycarbonylalkyl, alkoxythiocarbonylalkyl, thioalkoxycarbonylalkyl, alkenoxycarbonylalkyl, alkenoxythiocarbonylalkyl, thioalkenoxycarbonylalkyl, alkoxycarbonylalkenyl, alkoxycarbonylalkenyl, thioalkoxycarbonylalkenyl, each alkyl or alkenyl portion of which is C₁-C₂₂ alkyl or alkenyl that optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, C₂-C₁₂ dialkylamino, or C₃-C₁₈ trialkylammonium;
X is O, S, Se, -CR³R⁴, or -NR⁵, wherein
   R³ and R⁴ are independently C₁-C₂₂ alkyl or C₇-C₂₂ arylalkyl, each alkyl portion of which optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; or R³ and R⁴ taken in combination complete a five- or six-membered saturated or unsaturated ring that is optionally substituted with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; and
   R⁵ is H or C₁-C₂₂ alkyl that is optionally substituted one or more times with hydroxy, carboxy, sulfo, amino, C₁-C₆ alkylamino or C₂-C₁₂ dialkylamino;
Z is O, S, Se, -CR¹³R¹⁴, or -NR¹⁵, wherein
   R¹³ and R¹⁴ are independently C₁-C₂₂ alkyl or C₇-C₂₂ arylalkyl, each alkyl portion of which optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; or R¹³ and R¹⁴ taken in combination complete a five- or six-membered saturated or unsaturated ring that is optionally substituted with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; and
   R¹⁵ is H or C₁-C₂₂ alkyl that is optionally substituted one or more times with hydroxy, carboxy, sulfo, amino, C₁-C₆ alkylamino or C₂-C₁₂ dialkylamino;
each of R²¹, R²², R²³ is independently H, F, Cl, C₁-C₆ alkyl, C₁-C₆ alkoxy, aryl, aryloxy, a nitrogen heterocycle, an iminium ion; or any two adjacent substituents of R²¹, R²², R²³, when taken in combination, form an aryl group or a 4-, 5-, or 6-membered saturated or unsaturated hydrocarbon ring that is optionally substituted one or more times with C₁-C₆ alkyl, halogen, or a carbonyl oxygen; or R²¹ taken in combination with one of R³ and R⁴ forms a six-membered ring that is optionally substituted with C₁-C₆ alkyl; or R²³ adjacent to Z, taken in combination with one of R¹³ and R¹⁴ forms a six-membered ring that is optionally substituted with a C₁-C₆ alkyl;
R²⁴ is H or D in either R or S configuration; and
n is 0, 1, 2, or 3.

The reduced dyes disclosed herein, which are generally membrane permeable and may therefore accumulate in cells, exhibit little or no fluorescence compared to the corresponding oxidized dyes. Upon intracellular reaction with, *i.e.,* detection of, ROS, the reduced dyes disclosed herein are oxidized thereby affording a dye with substantial fluorescence intensity upon exposure to light of sufficient wavelength. The reduced dyes disclosed herein, in combination with, for example, probes for mitochondrial membrane potential, plasma membrane permeability, and/or caspase activation, may be used to differentiate hepatotoxic compounds from non-toxic compounds.

In one embodiment, Y and the heterocyclic 5-membered ring to which it is attached may form a first heterocyclic ring system that is a substituted benzazole, and W and the heterocyclic 5-membered ring to which it is attached may form a second heterocyclic ring system that is a substituted benzazole. In another embodiment, Y and the heterocyclic 5-membered ring to which it is attached may form a first heterocyclic ring system that is a substituted benzazole, and W and the heterocyclic 5-membered ring to which it is attached may form a second heterocyclic ring system that is a substituted azabenzazole (which ring incorporates two or more nitrogen atoms). In a further embodiment, Y and the heterocyclic 5-membered ring to which it is attached may form a first heterocyclic ring system that is a substituted benzoxazole, and W and the heterocyclic 5-membered ring to which it is attached may form a second heterocyclic ring system that is a substituted benzazole. In yet a further embodiment, Y and the heterocyclic 5-membered ring to which it is attached may form a first heterocyclic ring system that is a substituted benzoxazole, and W and the heterocyclic 5-membered ring to which it is attached may form a second heterocyclic ring system that is a substituted benzoxazole.

In one embodiment, Y and the heterocyclic 5-membered ring to which it is attached may form a first heterocyclic ring system that is a substituted azabenzazole, and W and the heterocyclic 5-membered ring to which it is attached form a second heterocyclic ring system that is a substituted azabenzazole. In another embodiment, Y and the heterocyclic 5-membered ring to which it is attached may form a first heterocyclic ring system that is a substituted benzathiazole, and W and the heterocyclic 5-membered ring to which it is attached may form a second heterocyclic ring system that is a substituted azabenzazole. In a further embodiment, Y and the heterocyclic 5-membered ring to which it is attached may form a first heterocyclic ring system that is a substituted benzathiazole, and W and the heterocyclic 5-membered ring to which it is attached may form a second heterocyclic ring system that is a substituted benzazole. In yet a further embodiment, Y and the heterocyclic 5-membered ring to which it is attached may form a first heterocyclic ring system that is a substituted benzathiazole, and W and the heterocyclic 5-membered ring to which it is attached may form a second heterocyclic ring system that is a substituted benzathiazole.

In one embodiment, Y and the heterocyclic 5-membered ring to which it is attached may form a first heterocyclic ring system that is a substituted benzimidazole, and W and the heterocyclic 5-membered ring to which it is attached may form a second heterocyclic ring system that is a substituted benzazole. In another embodiment, Y and the heterocyclic 5-membered ring to which it is attached may form a first heterocyclic ring system that is a substituted benzimidazole, and W and the heterocyclic 5-membered ring to which it is attached may form a second heterocyclic ring system that is a substituted azabenzazole (which ring incorporates two or more nitrogen atoms). In a further embodiment, Y and the heterocyclic 5-membered ring to which it is attached may form a first heterocyclic ring system that is a substituted benzoxazole, and W and the heterocyclic 5-membered ring to which it is attached may form a second heterocyclic ring system that is a substituted benzimidazole.

In one embodiment, Y and the heterocyclic 5-membered ring to which it is attached may form a first heterocyclic ring system that is a substituted azabenzazole, and W and the heterocyclic 5-membered ring to which it is attached may form a second heterocyclic ring system that is a substituted benzazole. In another embodiment, Y and the heterocyclic 5-membered ring to which it is attached may form a first heterocyclic ring system that is a substituted benzazole, and W and the heterocyclic 5-membered ring to which it is attached may form a second heterocyclic ring system that is a substituted benzoxazole. In a further embodiment, Y and the heterocyclic 5-membered ring to which it is attached may form a first heterocyclic ring system that is a substituted azabenzazole, and W and the heterocyclic 5-membered ring to which it is attached may form a second heterocyclic ring system that is a substituted benzathiazole. In yet a further embodiment, Y and the heterocyclic 5-membered ring to which it is attached may form a first heterocyclic ring system that is a substituted benzazole, and W and the heterocyclic 5-membered ring to which it is attached may form a second heterocyclic ring system that is a substituted benzathiazole. In another embodiment, Y and the heterocyclic 5-membered ring to which it is attached may form a first heterocyclic ring system that is a substituted benzoxazole, and W and the heterocyclic 5-membered ring to which it is attached may form a second heterocyclic ring system that is a substituted benzathiazole.

The first and second heterocyclic ring systems, as well as the polymethine linker incorporating R²¹, R²², R²³, are optionally further substituted with a variety of substituents or are fused to additional rings that are optionally further substituted, which substitution fine tunes the absorption and emission spectrum of the resulting reduced dye compound and, indirectly, that of the corresponding oxidized (by ROS) dye compound as well. Examples of appropriate polymethine linkers have been previously described in the patent literature, including polymethine linkers moieties that incorporate nonhydrogen substituents, ring structures, and rigidizing elements (*see,* U.S. Patent Nos. 5,831,098 to Ollmann, Jr (1998); 6,086,737 to Patonay et al. (2000); 6,048,982 to Waggoner (2000); and 5,453,505 to Lee et al. (1995); 5,639,874 to Middendorf et al. (1997); 3,864,644 to Lincoln et al (1975); 4,011,086 to Simson (1977); all of which are incorporated herein by reference).

In one illustrative embodiment, a reduced dye compound of the present invention has structural formula (**III**): 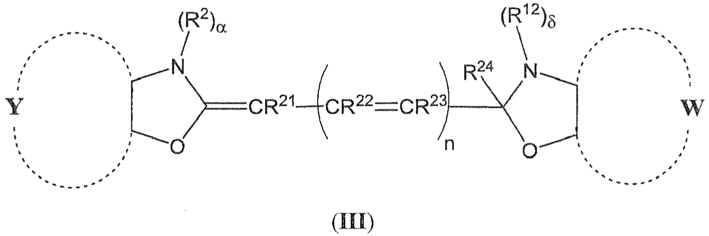 wherein W, Y, R², R¹², R²¹, R²², R²³, R²⁴, n, α, and δ are as defined herein.

In another illustrative embodiment, a reduced dye compound of the present invention has structural formula (**IV**): 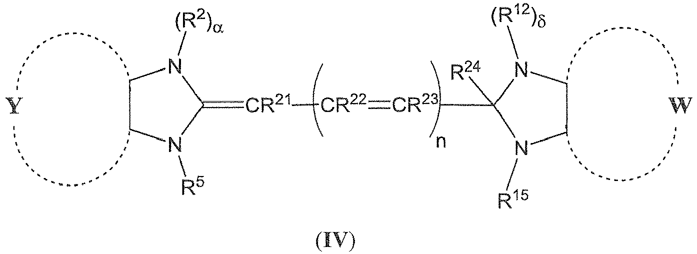 wherein W, Y, R², R⁵, R¹², R¹⁵, R²¹, R²², R²³, R²⁴, n, α, and δ are as defined herein.

In another illustrative embodiment, a reduced dye compound of the present invention has structural formula (**V**): 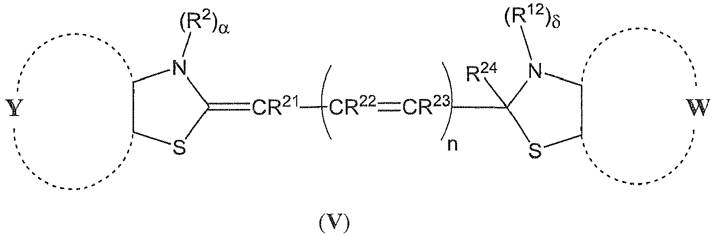 wherein W, Y, R², R¹², R²¹, R²², R²³, R²⁴, n, α, and δ are as defined herein.

In another illustrative embodiment, a reduced dye compound of the present invention has structural formula (**VI**): 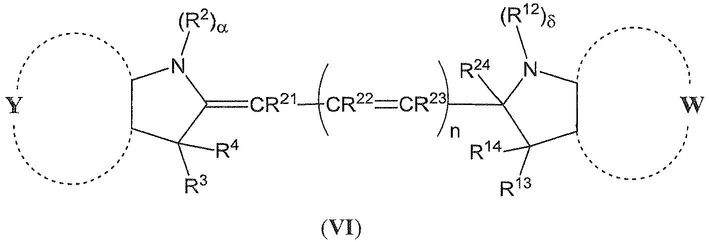 wherein W, Y, R², R³, R⁴, R²¹, R¹³, R¹⁴, R²¹, R²¹, R²³, R²⁴, n, α, and δ are as defined herein.

The choice of W, X, Y and Z moieties in structural formula (I), as well as the length of the polymethine bridge between the heterocyclic ring systems, have an effect on the absorption and fluorescence emission properties of the reduced dye compounds disclosed herein. W and Y may be the same or different, X and Z may be the same or different, and the spectral properties of the resulting reduced dye compounds may be tuned accordingly by careful selection of W, X, Y and Z. In one illustrative embodiment, X is -CR³R⁴ and Z is one of O, S, Se, -CR¹³R¹⁴ or -NR¹⁵, where R³, R⁴, R²¹, R¹⁴, and R¹⁵ are as defined herein. In another illustrative embodiment, X is one of O, S, Se, -CR³R⁴ or -NR⁵ and Z is -CR¹³R¹⁴, where R³, R⁴, R⁵, R¹³, R¹⁴ are as defined herein. Typically X and Z are -CR³R⁴ and -CR¹³R¹⁴, respectively.

Exemplary reduced dye compounds illustrating various combinations of Y and W in the first and second heterocyclic ring systems, respectively, of structural formula (I), each combination of which is contemplated to be within the scope of the present invention, are shown below in structural formulae **VII - XXII** (wherein X, Z, R², R¹², R²¹-R²⁴, and n are as defined herein); for simplicity, all aromatic ring substituents are shown as hydrogen:

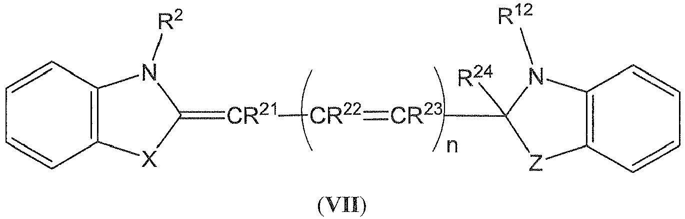

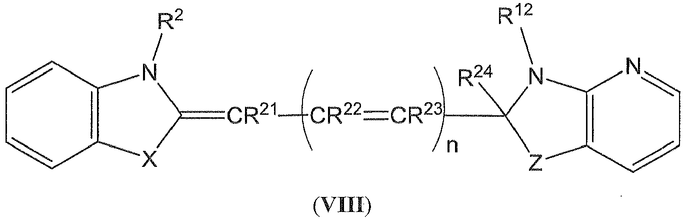

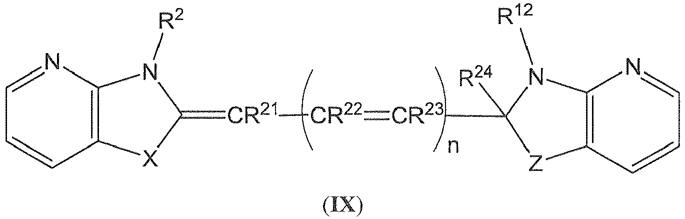

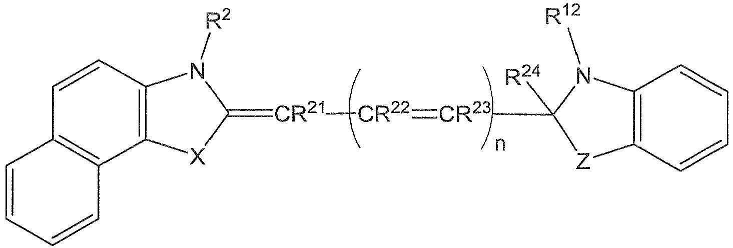

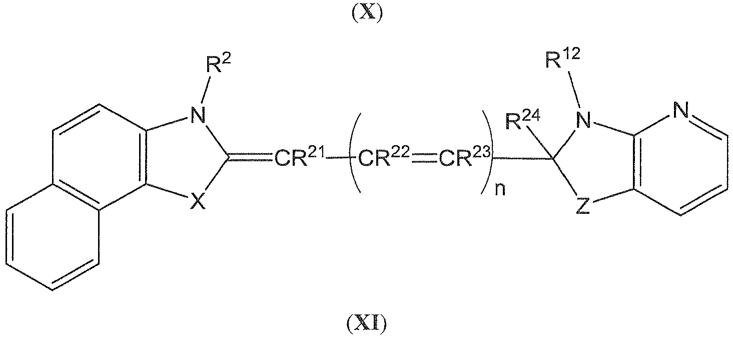

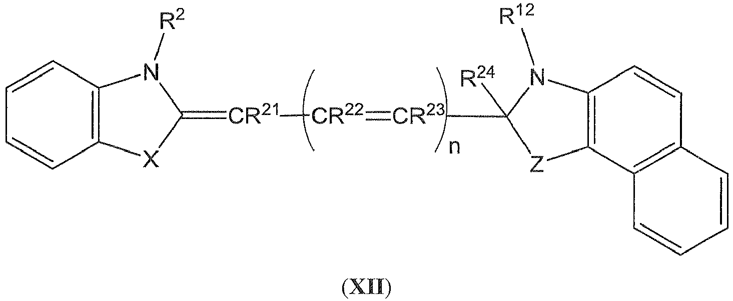

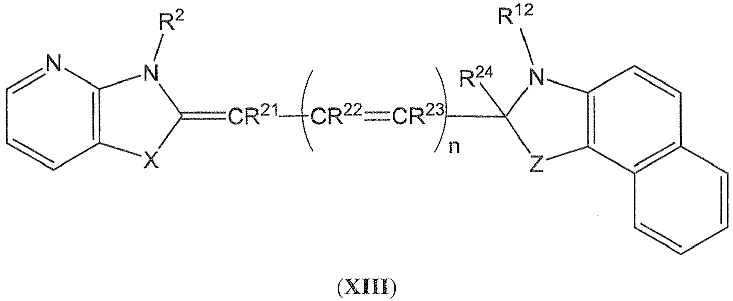

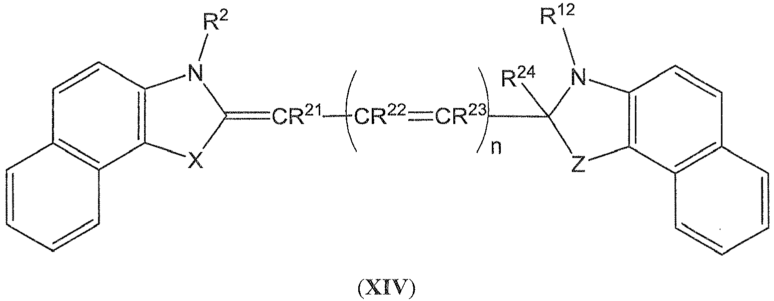

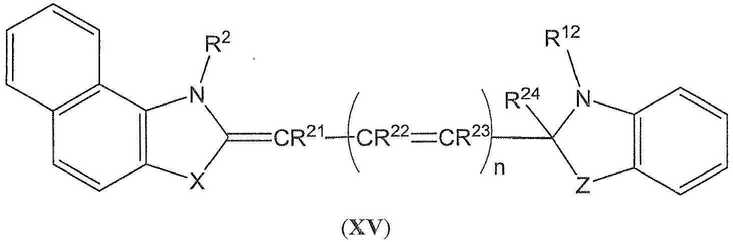

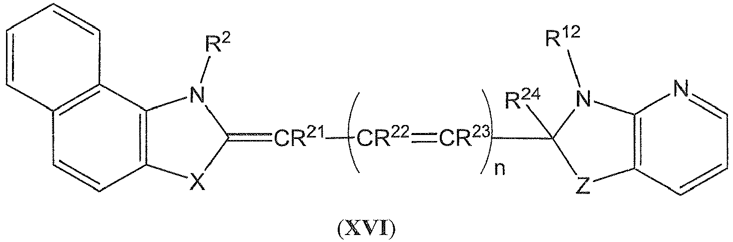

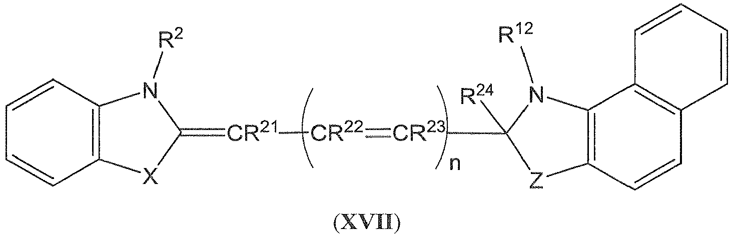

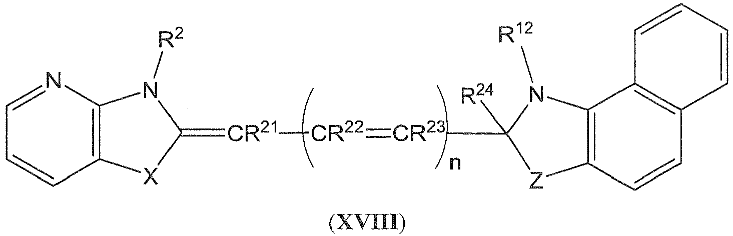

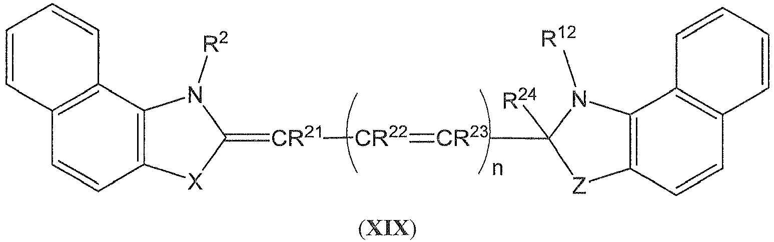

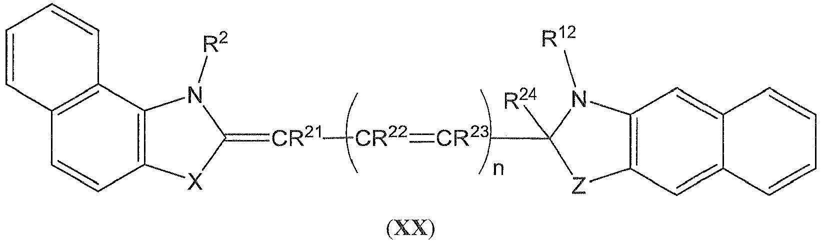

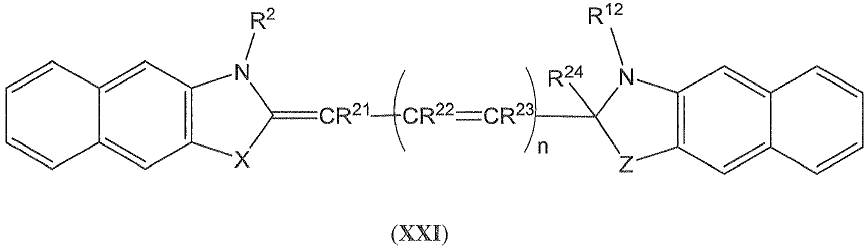

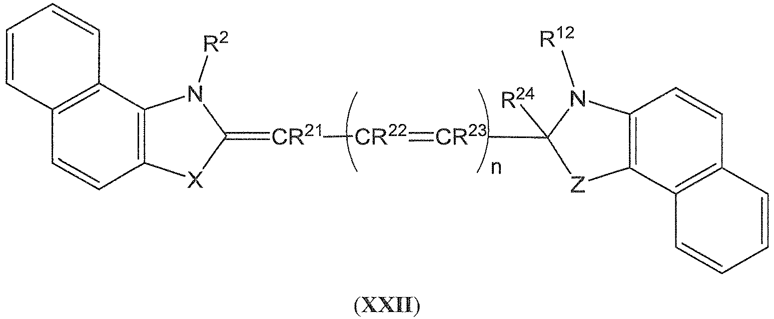

In a preferred embodiment, Y and the heterocyclic 5-membered ring to which it is attached form a substituted benzazole ring, W and the heterocyclic 5-membered ring to which it is attached form a substituted benzazole ring, and X and Z are -CR³R⁴ and - CR¹³R¹⁴, respectively, as shown in structural formula (**XXIII**): 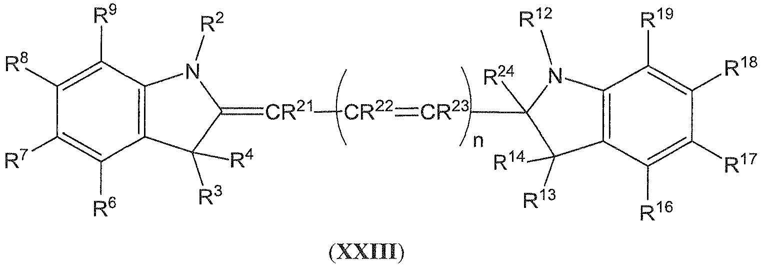 wherein R²-R⁴, R¹²-R¹⁴, R²¹-R²⁴, and n are as defined herein, and R⁶-R⁹ and R¹⁶-R¹⁹ are independently H, amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted by substituents selected from the group consisting of carboxy, sulfo, amino, and hydroxy. In a particularly preferred embodiment, R³, R⁴, R¹³, and R¹⁴ are independently C₁-C₂₂ alkyl, R² and R¹² are independently methoxycarbonylalkyl, ethoxycarbonylalkyl, or propoxycarbonylalkyl, and n is 1 or 2.

In another preferred embodiment, Y and the heterocyclic 5-membered ring to which it is attached form a substituted benzazole ring, W and the heterocyclic 5-membered ring to which it is attached form a substituted azabenzazole ring, and X and Z are -CR³R⁴ and -CR¹³R¹⁴, respectively, as shown in structural formula (**XXIV**): 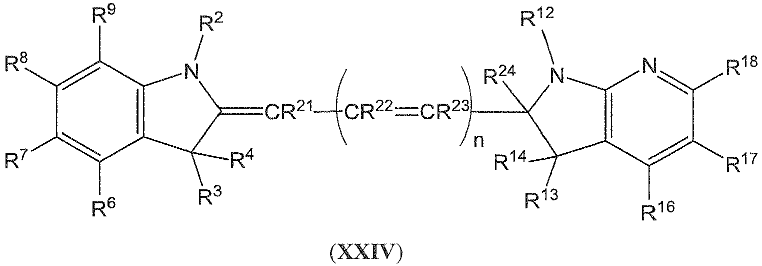 wherein R²-R⁴, R¹²-R¹⁴, R²¹-R²⁴, and n are as defined herein, and R⁶-R⁹ and R¹⁶-R¹⁸ are independently H, amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy. In a particularly preferred embodiment, R³, R⁴, R¹³, and R¹⁴ are independently C₁-C₂₂ alkyl, R² and R¹² are independently methoxycarbonylalkyl, ethoxycarbonylalkyl, or propoxycarbonylalkyl, and n is 1 or 2.

In yet another preferred embodiment, Y and the heterocyclic 5-membered ring to which it is attached form a substituted azabenzazole ring, W and the heterocyclic 5-membered ring to which it is attached form a substituted azabenzazole ring, and X and Z are - CR³R⁴ and -CR¹³R¹⁴, respectively, as shown in structural formula (**XXV**): 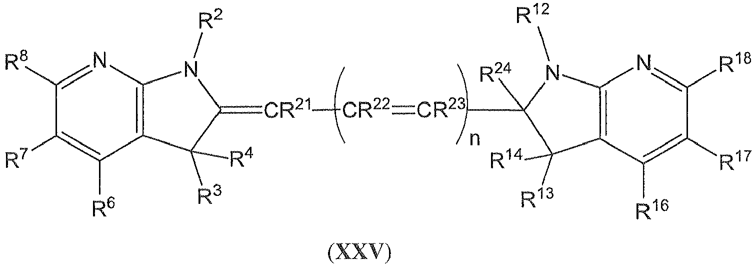 wherein R²-R⁴, R¹²-R¹⁴, R²¹-R²⁴, and n are as defined herein, and R⁶-R⁸ and R¹⁶-R¹⁸ are independently H, amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy. In a particularly preferred embodiment, R³, R⁴, R¹³, and R¹⁴ are independently C₁-C₂₂ alkyl, R² and R¹² are independently methoxycarbonylalkyl, ethoxycarbonylalkyl, or propoxycarbonylalkyl, and n is 1 or 2.

The reduced dye compounds disclosed herein are either hydrocyanines or deuterocyanines, with both types being suitable for the compositions, methods of use, and kits described herein. These reduced dyes display enhanced stability to auto-oxidation, have tunable emission wavelengths, and nanomolar to millimolar sensitivity for ROS. Furthermore, oxidation of a given deuterocyanine generates the identical cyanine as its hydrocyanine analogue, thereby permitting these probes to be used interchangeably with existing protocols for ROS sensors. Although the hydrocyanine dyes disclosed herein exhibit improved stability to auto-oxidation in aqueous solution, compared to prior art ROS probes such as DHE, their background oxidation in cell culture exceeds that of the corresponding deuterocyanine dyes, which dyes may display greater stability to auto-oxidation and thereby exhibit lower levels of background fluorescence. Without wishing to be bound by theory, the scientific basis for this effect is that when C-H bonds are broken in the rate-determining step of a reaction, substitution of deuterium for hydrogen may result in a roughly 2-10 fold rate deceleration for deuterium relative to hydrogen; this is known as a primary kinetic isotope effect (16). Thus, deuterium substitution in the hydrocyanine molecules at the appropriate position would render the molecule more stable to spontaneous oxidation (to air, upon storage, etc.) by virtue of this relatively slow reaction rate deceleration, while still allowing for adequate reactivity in the actual ROS sensing event where the rate difference between H and D would be miniscule relative to the oxidation event rate.

Another embodiment provides a composition for the detection of reactive oxygen species (ROS), the composition comprising:
a) one or more of the reduced dye compounds described herein; and
b) a carrier,
wherein the reduced dye compounds are present in an amount effective to detect the presence of ROS upon reaction with the ROS.

The reduced dye compounds disclosed herein are typically solids at room temperature. Therefore, the compounds will generally be dissolved or suspended in a carrier for use or administration as a composition. The exact concentration of reduced dye to be used is dependent upon the experimental conditions and the desired results, and optimization of experimental conditions is typically required to determine the best concentration of reduced dye to be used in a given application. The concentration of reduced dye typically ranges from nanomolar to millimolar, preferably from nanomolar to micromolar. The reduced dye concentrations are readily determined from methods known in the art for use of similar compounds under comparable conditions for the desired optical response.

Typically for *in vivo* use, the concentration of the reduced dye is the minimum amount required to yield a detectable signal in the sample within a reasonable time, with minimal background fluorescence. The exact concentration of reduced dye to be used is dependent upon the experimental conditions and the desired results. In one embodiment, the amount of dye is from about 50 µg/kg to about 50 g/kg, preferably from about 50 µg/kg to about 10 g/kg, more preferably from about 50 µg/kg to about 1 g/kg, most preferably from about 50 µg/kg to about 0.1 g/kg.

For *in vivo* use, the compounds will typically be combined with one or more carriers. As used herein, the "carrier" refers to all components present in the composition other than the reduced dyes. The term "carrier" includes, but is not limited to, solvents, suspending agents, dispersants, buffers, pH modifying agents, isotonicity modifying agents, preservatives, antimicrobial agents, additives, excipients, and combinations thereof. Additives include those that are useful for processing or preparing the composition, those that may aid in the incorporation or stability of the compositions, or those that may be useful in modifying performance of the composition. Excipients include any number of other medically or pharmaceutically acceptable agents such as preservatives, lipids, fatty acids, waxes, surfactants, plasticizers, porosigens, antioxidants, bulking agents, buffering agents, chelating agents, cosolvents, water-soluble agents, insoluble agents, metal cations, anions, salts, osmotic agents, synthetic polymers, biological polymers, hydrophilic polymers, polysaccharides, sugars, hydrophobic polymers, hydrophilic polymers, and combinations thereof.

For *in vivo* applications, the formulations may be administered by a variety of routes. Typically, the compounds are formulated for parenteral administration including, but not limited to, intravenous, intraarterial, intramuscular, intraperitoneal, subcutaneous, intradermal, infusion, subconjunctive and intracatheter (e.g., aurologic delivery), as well as administration via external scopic techniques such as, for example, arthoscopic or endoscopic techniques.

The compositions disclosed herein may be administered to specific locations (e.g., local delivery) including, but not limited to, intrathecal, intracardiac, intraosseous (e.g., bone marrow), stereotactic-guided delivery, infusion delivery, CNS delivery, stereo-tactically administered delivery, orthopaedic delivery (e.g., delivery to joints or into bone), cardiovascular delivery, inter-, intra- and para-ocular delivery (including intravitreal and sclera, retrobulbar and sub-tenous delivery), as well as delivery to any multitude of other sites, locations, organs, etc.

Typically for *in vitro* use, the concentration of the reduced dye contacted with cells is from about 1 µM to about 100 µM. However, the specific concentration may be readily adjusted based on the assay being performed. In general, the reduced dye compounds disclosed herein will be dissolved or suspended in an appropriate solvent suitable for the intended application. Suitable solvents include, but are not limited to, aqueous solvents, such as water, PBS, saline, organic solvents, such as DMSO and alcohols, and combinations thereof. The reduced dyes disclosed herein may also or alternatively be encapsulated in various nanostructures to improve cell delivery. Suitable nanostructures include, but are not limited to, liposomes, microparticles, such as polymeric microparticles, and micelles, such as polymeric micelles formed from block copolymers.

Another embodiment provides a method of detecting reactive oxygen species (ROS) in a sample, the method comprising the steps of:
a) contacting the sample with an effective amount of one or more of the reduced dye compounds described herein or the compositions described herein; and
b) determining if the reduced dye compound has been oxidized.

The reduced dye compounds disclosed herein may be used as diagnostic tools to evaluate or detect a variety of diseases and disorders or markers for diseases or disorders, characterized by the production or overproduction of ROS *in vivo* or to detect or quantify ROS in a sample *in vitro.* The fluorescence emitted by the oxidized dyes, which dyes are produced upon reaction of the reduced dyes disclosed herein with ROS, may be measured using fluorescence spectroscopy or fluorescence microscopy depending on the application. Exemplary methods of fluorescence microscopy include, but are not limited to, confocal laser scanning microscopy, total internal reflection fluorescence microscopy, histological analysis via fluorescence, flow cytometry, analyses using plate readers, such as fluorescence microplate readers, standard or mini fluorometers, or epifluorescence microscopes.

In one embodiment, the reduced dye compounds disclosed herein, and compositions containing those dyes, may be used as diagnostic tools *in vivo* to evaluate or detect a variety of diseases and disorders characterized by the production or overproduction of ROS. Exemplary diseases and disorders include, but are not limited to, carotid artery injuries, atherosclerosis, hypertension, cancers, diseases and disorders characterized by inflammation, radiation-induced late normal tissue damage, tissue damage due to chemotherapy, reperfusion after ischemia, or transplantation, diabetes, such as type I diabetes (T1D), neurodegenerative diseases, such as Alzheimer's disease, Parkinson's disease, amyotrophic lateral sclerosis (ALS) and Huntington's disease, cerebrovascular disease, cystic fibrosis, chronic kidney disease, cardiovascular disease, preeclampsia and ophthalamic diseases (i.e., diseases of the eye) (17-20). In addition, the reduced dye compounds disclosed herein may be used in positron emission tomography (PET) as contrast agents, imaging of biomolecules, and photoacoustic imaging, each of which is described in WO 2009/121055 A1.

In another embodiment, the reduced dye compounds disclosed herein, and compositions containing those dyes, may be used for a variety of *in vitro* or *ex vivo* assays. For example, the reduced dyes may be used for single cell imaging or to assay a cell suspension, during which the dye(s) are loaded into cells by incubation with the cells for a sufficient period of time. Specific assays include, but are not limited to, those with live organ cultures as well as cell culture assays.

The general procedure for using the reduced dyes disclosed herein is as follows: One or more reduced dye is administered *in vivo* or *in vitro* to contact a biological sample, *i.e*., cells, cell cultures, tissues, organs, serum, bodily fluids, biological fluids, etc. The one or more reduced dyes disclosed herein may be formulated with one or more carriers depending on the assay. The reduced dye(s) are incubated with the sample for a period of time sufficient for the reduced dye to react with reactive oxygen species (ROS) present in the sample. After such time, the sample is analyzed for fluorescence intensity. The fluorescence intensity after incubation is compared to the fluorescence intensity of the reduced dye. An increase in the fluorescence intensity of the dye in the biological sample indicates oxidation of the dye, and thus the presence of reactive oxygen species (ROS). The increased fluorescence may be measured or detected using the techniques listed above.

Another embodiment provides a kit for detecting reactive oxygen species (ROS) in a sample, the kit comprising:
a) one or more of the reduced dye compounds described herein or the compositions described herein; and
b) one or more containers.

As used herein, the term "kit" refers to a packaged set of related components, typically one or more compounds or compositions. The kits disclosed herein comprise one or more of the reduced dye compounds described herein, one or more carriers suitable for *in vitro* or *in vivo* applications, and one or more containers in which to store the one or more reduced dyes and/or one or more carriers, such as solvents, buffers, stabilizers, pH adjusting agents, etc. The kit optionally contains instructions for how to prepare the one or more reduced dyes or how to prepare a composition containing the one or more reduced dye, how to administer the dye or composition containing the dye, and how to detect oxidation of the dye (e.g., excitation wavelength and emission wavelength). In a preferred embodiment, the kit contains instructions for performing an assay that detects the presence of one or more reactive oxygen species (ROS). The kit may further contain one or more pieces of equipment to administer the dye, or composition containing the dye including, but not limited to, syringes, pipettes, pipette bulbs, spatulas, vials, syringe needles, and various combinations thereof.

The reduced dyes disclosed herein suitable for the compositions, methods of use, and kits described herein are generally prepared by reduction of the corresponding cyanine dye with a reducing agent. For example, hydrocyanine and deuterocyanine dyes disclosed herein may be synthesized from their corresponding cyanine dyes via a one-step reduction using a reducing agent such as sodium borohydride (NaBH₄) or sodium borodeuteride (NaBD₄). The reduced dyes disclosed herein exhibit little or no fluorescence (due to the disrupted π-conjugation) compared to their corresponding cyanine dyes. However, upon reaction with ROS, the reduced dyes are oxidized (regenerating the cyanine dye having extended π-conjugation) thereby affording a substantial increase in fluorescence intensity when exposed to light of sufficient wavelength. Methods of producing a wide variety of cyanine dyes are described in U.S. Patent Nos. 6,977,305, 7,566,790, 7,671,2147, and 790,893.

Another embodiment provides a process for preparing a reduced dye compound *(i.e.,* an ROS probe) of structural formula (**I**): 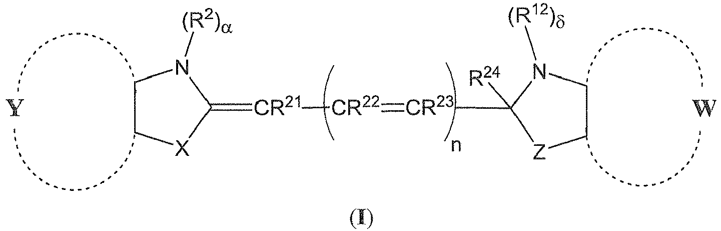 the process comprising:
a) reacting a cyanine dye compound of structural formula (**II**) 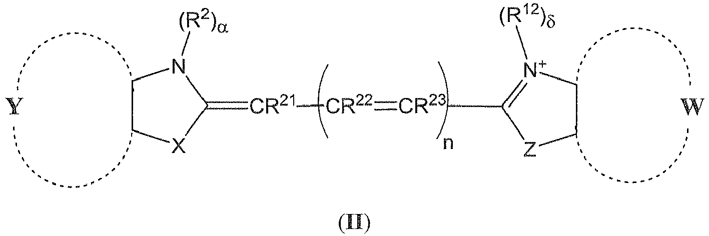 with NaBH₄ or NaBD₄, wherein:
   W, X, Y, Z, R², R¹², R²¹, R²², R²³, R²⁴, n, α, and δ are as defined herein.

In one illustrative embodiment of such a process, a compound of structural formula (I) is prepared as shown in Scheme **I:** 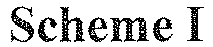 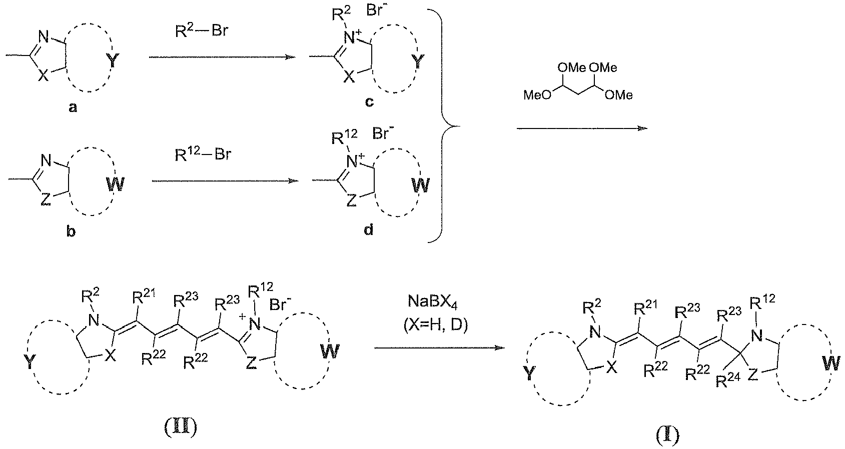 wherein R²¹, R²², R²³ are each H, n is 2 and W, X, Y, Z, R², R¹², and R²⁴ are as defined herein.

In one embodiment, where X = -CR³R⁴, Z = -CR¹³R¹⁴, each of R³, R⁴, R¹³, and R¹⁴ are independently C₁-C₂₂ alkyl, and Y = W = phenyl, alkylation of 2,3,3-trialkyl-3*H-*indole (**a** and **b**) with ethyl 4-bromobutyrate (R²-Br = R¹²-Br) produces the corresponding indolium salts (**c** and **d**). Subsequent reaction with 1,1,3,3-tetramethoxypropane in pyridine affords compounds of structural formula (**II**), whereupon reduction with sodium borohydride or sodium borodeuteride affords compounds of structural formula (**I**).

In another illustrative embodiment of such a process, a compound of structural formula (**I**) is prepared as shown in Scheme **II**: 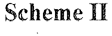 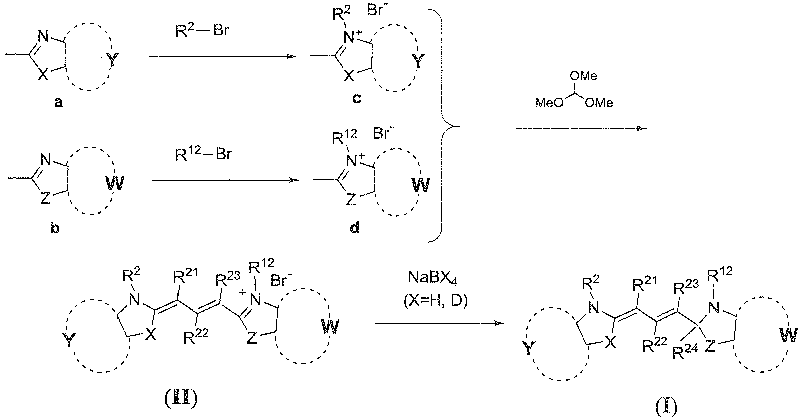 wherein R²¹, R²², R²³ are each H, n is 1 and W, X, Y, Z, R², R¹², and R²⁴ are as defined herein.

In one embodiment, where X = -CR³R⁴, Z = -CR¹³R¹⁴, each of R³, R⁴, R¹³, and R¹⁴ are independently C₁-C₂₂ alkyl, and Y = W = phenyl, alkylation of 2,3,3-trialkyl-3*H-*indole (**a** and **b**) with ethyl 4-bromobutyrate (R²-Br = R¹²-Br) produces the corresponding indolium salts (**c** and **d**). Subsequent reaction with trimethyl orthoformate in pyridine affords compounds of structural formula (**II**), whereupon reduction with sodium borohydride or sodium borodeuteride affords compounds of structural formula (**I**).

A detailed description of the present invention having been provided above, the following examples are given for the purpose of illustrating the invention.

### EXAMPLES

### Chemical Synthesis of Reduced Dye Compounds (ROS Probes)

Preparation of Reduced Dyes (ROS Probes) Disclosed Herein: Compounds (**4a**) and (**4b**)

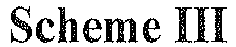

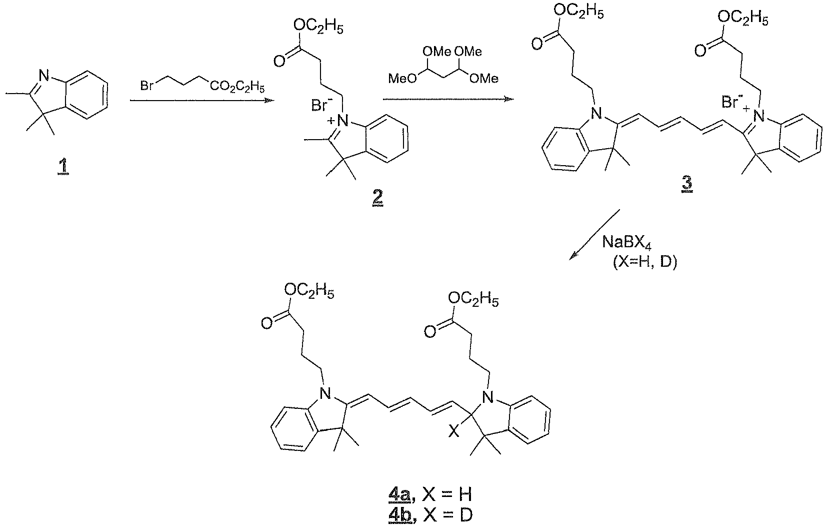

### Synthesis of 1-(4-ethoxy-4-oxobutyl)-233-trimethyl-3H-indolium bromide (2)

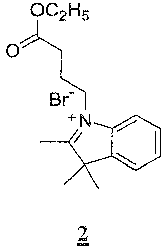

A mixture of 2,3,3-trimethylindolenine (2.6 g, 16.3 mmol) and ethyl 4-bromobutyrate (18.8 g, 96.3 mmol) was heated at 120°C for 17 h. The resulting solution was cooled to room temperature. It was then added into about 100 mL of ethyl acetate slowly over 5 minutes while stirring vigorously. It was filtered, washed with ethyl acetate and dried under vacuum to give the desired compound (**2**) as a white solid (4.1 g, 73% yield). TLC: R_{f}=0.60 (silica gel, 5 % methanol in chloroform), ¹H NMR (DMSO-d₆): δ 8.10 (d, 1H), 7,98 (d, 1H), 7.65 (dd, 2H), 4.47 (t, 2H), 4.04 (q, 2H), 2.83 (s, 3H), 2.59 (t, 2H), 2.10-2.05 (m, 2H), 1.54 (s, 6H), 1.16 (t, 3H).

### Synthesis of 1-(4-ethoxy-4-oxobutyl)-((1E,3E,4E)-5-(1-(4-ethoxy-4-oxobutyl)-3,3-dimethylindolin-2-ylidene)penta-1,3-dienyl-3,3-dimethyl-3H-indolium bromide (3)

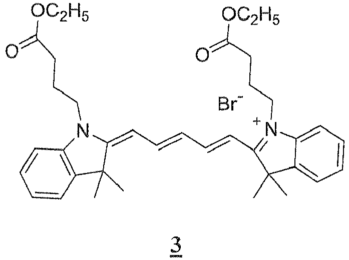

A mixture of 1-(4-ethoxy-4-oxobutyl)-2,3,3-trimethyl-3*H*-indolium bromide (**2**, 4.0 g, 11.3 mmol) and 1,1,3,3-tetramethoxypropane (3.71 g, 22.6 mmol) in pyridine (50 mL) was stirred at 90°C for 2.5 h. It was cooled to room temperature and most of the pyridine was removed under reduced pressure. The resulting residue was purified by column chromatography over silica gel eluting first with 30% ethyl acetate in chloroform and then with 10% methanol in chloroform to obtain the desired product (**3**) as a blue solid (1.72 g, 23% yield). TLC: R_{f} = 0.20 (silica gel, 10% methanol in chloroform). ¹H NMR (CD₃OD): δ 8.32 (dd, 2H), 7.53-7.27 (m, 8H), 6.65 (dd, 1H), 6.39 (d, 2H), 4.17 (m, 8H), 2.57 (t, 4H), 2.14-2.07 (m, 4H), 1.78 (s, 12H), 1.27 (t, 6H). Absorption maximum: 643 nm in methanol, Emission maximum: 664 nm.

### Synthesis of 1-(4-ethoxy-4-oxobutyl)-3,3-dimetyl-2-((1E,3E,5E)-5-(1-(4-ethoxy-4-oxobutyl)-3,3-dimethylindolin-2-ylidene)penta-1,3-dienyl)indoline (4a)

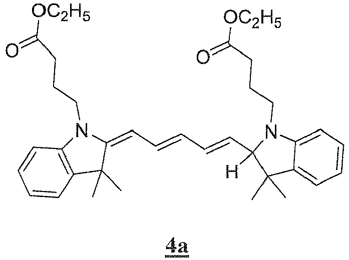

To a solution of 1-(4-ethoxy-4-oxobutyl)-((1*E*,3*E*,4*E*)-5-(1-(4-ethoxy-4-oxobutyl)-3,3-dimethylindolin-2-ylidene)penta-1,3-dienyl-3,3-dimethyl-3*H-*indolium bromide (**3**, 100 mg, 0.15 mmol) in methanol (2 mL) was added sodium borohydride (20 mg, 0.53 mmol) slowly and the reaction mixture was stirred at an ice-water bath temperature for 15 min. The reaction mixture was diluted with ethyl acetate (40 mL) and washed with water (20 mL). The separated organic layer was dried over Na₂SO₄ and filtered. After evaporation of the solvent, the crude product was purified by column chromatography over silica gel eluting with 10% ethyl acetate in hexane to give the desired product (**4a**, 71 mg, 81 % yield). TLC: R_{f} = 0.21 (silica gel, 10 % ethyl acetate in hexane). ¹H NMR (CD₃OD); δ 7.15-7.10 (m, 2H), 7.04-6.97 (m, 2H), 6.90-6.77 (m, 2H), 6.11-6.05 (m, 1H), 5.56-5.50 (m, 1H), 5.44 (d, 1H), 4.16-4.07 (m, 4H), 3.66 (t, 2H), 3.53 (d, 1H), 3.17-3.04 (m, 3H), 2.44-2.38 (m,4H), 1.97-1.85 (m, 4H), 1.33 (s, 6H), 1.32-1.23 (s, t, 9H, one singlet and two triplets of methyl peaks overlapped together), 1.04 (s, 3H). Absorption maximum: 361 mn in methanol.

### Synthesis of 1-(4-ethoxy-4-oxobutyl)-2-deutero-3,3-dimetyl-2-((1E,3E,5E)-5-(1-(4-ethoxy-4-oxobutyl)-3,3-dimethylindolin-2-ylidene)penta-1,3-dienyl)indoline (4b)

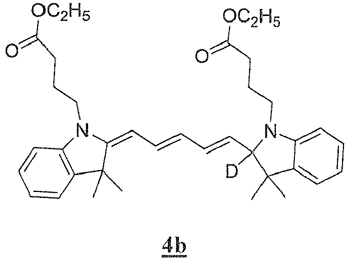

To a solution of 1-(4-ethoxy-4-oxobutyl)-((1*E*,3*E*,4*E*)-5-(1-(4-ethoxy-4-oxobutyl)-3,3-dimethylindolin-2-ylidene)penta-1,3-dienyl-3,3-dimethyl-3*H-*indolium bromide (**3**, 42 mg, 0.06 mmol) in methanol (2 mL) was added sodium borodeuteride (13 mg, 0.30 mmol) slowly and the reaction mixture was stirred at an ice-water bath temperature for 15 min. The reaction mixture was diluted with ethyl acetate (30 mL) and washed with water (20 mL). The separated organic layer was dried over Na₂SO₄ and filtered. After evaporation of the solvent, the crude product was purified by column chromatography over silica gel eluting with 10% ethyl acetate in hexane to give the desired product (**4b**, 30 mg, 71 % yield). TLC: R_{f} = 0.20 (silica gel, 10 % ethyl acetate in hexane). ¹H NMR (CD₃OD); δ 7.18-6.40 (m, 9H), 6.18-6.05 (m 2H), 5.52 (d, 1H), 5.43 (d, 1H), 4.17-4.08 (m, 4H), 3.72-3.69 (m, 2H), 3.18-3.03 (m, 3H), 2.44-2.37 (m, 4H), 1.98-1.84 (m, 4H), 1.32 (s, 6H), 1.33-1.22 (s, t, 9H, one singlet and two triplets of methyl peaks overlapped together), 1.04 (s, 3H).

### Chemical Synthesis of Reduced Dye Compounds (ROS Probes)

### Preparation of Reduced Dyes (ROS Probes) Disclosed Herein: Compounds (6a) and (6b)

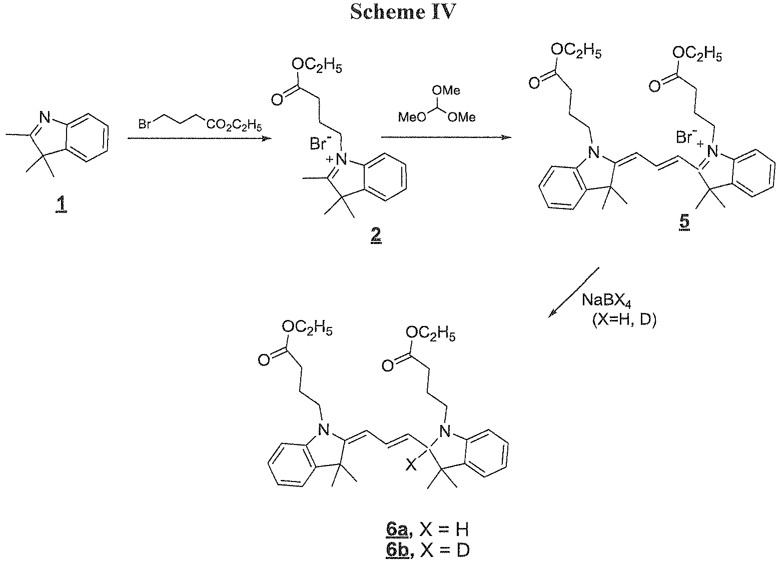

### Synthesis of 1-(4-ethoxy-4-oxobutyl)-2-((1E,3E)-3-(1-4-ethoxy-4-oxobutyl)-3,3-dimethylindolin-2-ylidene)prop-1-enyl)-3,3-dimethyl-3H-indolium bromide (5)

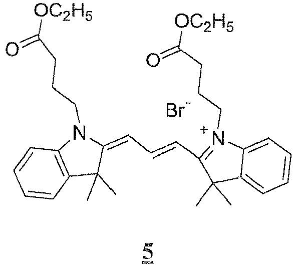

A mixture of 1-(4-ethoxy-4-oxobutyl)-2,3,3-trimethyl-3*H*-indolium bromide (**2**, 0.72 g, 2.0 mmol) and trimethyl orthoformate (2.0 g, 20 mmol) in pyridine (20 mL) was stirred at 90°C for 2 h. It was cooled to room temperature and most of the pyridine was removed under reduced pressure. The residue was purified by column chromatography over silica gel, eluting first with 30% ethyl acetate in chloroform and then with 10% methanol in chloroform to obtain the desired product (**5**) as a red solid (0.26 g, 21% yield). TLC: R_{f} = 0.18 (silica gel, 10% methanol in chloroform). ¹H NMR (CD₃OD): δ 8.59 (t, 1H), 7.58-7.56 (m, 2H), 7.47-7.43 (m, 4H), 7.36-7.32 (m, 2H), 6.53 (d, 2H), 4.23 (t, 4H), 4.14 (q, 4H), 2.59 (t, 4H), 2.16-2.10 (m, 4H), 1.80 (s, 12H), 1.25 (t, 6H).

### Synthesis of 1-(4-ethoxy-4-oxobutyl)-3,3-dimethyl-2-((1E,3E)-3-(1-(4-ethoxy-4-oxobutyl)-3,3-dimethylindolin-2-ylidene)prop-1-enyl)indoline (6a)

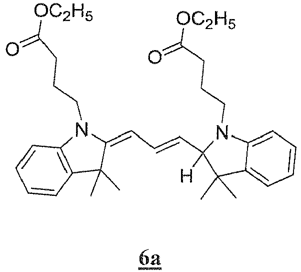

To a solution of 1-(4-ethoxy-4-oxobutyl)-((1*E*,3*E*,4*E*)-5-(1-(4-ethoxy-4-oxobutyl)-3,3-dimethylindolin-2-ylidene)penta-1,3-dienyl-3,3-dimethyl-3*H-*indolium bromide (**5**, 21 mg, 0.03mmol) in methanol (1 mL) was added sodium borohydride (7 mg, 0.50 mmol) slowly and the reaction mixture was stirred at an ice-water bath temperature for 15 min. The reaction mixture was diluted with chloroform (10 mL) and washed with water (10 mL). The separated organic layer was dried over Na₂SO₄ and filtered. After evaporation of the solvent, the crude product was purified by column chromatography over silica gel eluting with 10% ethyl acetate in hexane to give the desired product (**6a**, 16 mg, 80 % yield). TLC: R_{f} = 0.20 (silica gel, 10 % ethyl acetate in hexane).

### Synthesis of 1-(3-carboxypropyl)-2,3,3-trimethyl-3H-indol-1-ium bromide (7)

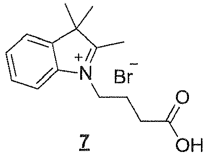

A mixture of 2,3,3-trimethylindolenine (3.0 g, 18.8 mmol) and 4-bromobutyric acid (18.0 g, 107.8 mmol) is heated at 120°C for 18 h. The reaction mixture is cooled to room temperature. It is then added into about 100 mL of ethyl acetate slowly over 5 minutes period while stirring vigorously. The resulting solid is filtered, washed with ethyl acetate and dried under vacuum to give the desired compound (**7**).

### Synthesis of 1-(4-(allyloxy)-4-oxobutyl)-2,3,3-trimethyl-3H-indol-1-ium bromide (8)

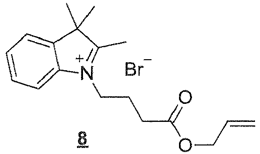

To a solution of 1-(3-carboxypropyl)-2,3,3-trimethyl-3*H*-indol-1-ium bromide (**7**, 3.5 g, 10.7 mmol) in anhydrous DMF (20 mL) is added anhydrous K₂CO₃ (1.6 g, 11.6 mmol) and tetrabutylammonium bromide (0.7 g, 2.2 mmol) followed by the dropwise addition of allyl bromide (3.7 mL, 42.8 mmol). The mixture is stirred at room temperature for 1 hour and then concentrated under vacuum. The resulting residue is diluted with water (20 mL) and extracted with chloroform (3 x 20 mL). The combined organic layers are washed sequentially with 10% HBr, 5% NaHCO₃ and saturated NaBr solutions. It is then dried over Na₂SO₄, filtered and concentrated under vacuum to give the compound (**8**).

### Synthesis of 1-(4-(allyloxy)-4-oxobutyl)-2-((1E,3E)-3-(1-(4-(allyloxy)-4-oxobutyl)-3,3-dimethylindolin-2-ylidene)prop-1-en-1-yl)-3,3-dimethyl-3H-indol-1-ium bromide (9)

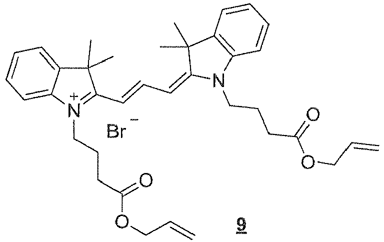

A mixture of 1-(4-(allyloxy)-4-oxobutyl)-2,3,3-trimethyl-3*H*-indol-1-ium bromide (**8**, 3.0 g, 8.2 mmol) and trimethyl orthoformate (8.7 g, 81.9 mmol) in pyridine (20 mL) is stirred at 90°C for 2 h. It is cooled to room temperature and most of the pyridine is removed under reduced pressure. The resulting residue is purified by column chromatography over silica gel eluting first with 30% ethyl acetate in chloroform and then with 5% methanol in chloroform to give the desired product (**9**).

### Synthesis of allyl 4-((E)-2-((E)-3-(1-(4-(allyloxy)-4-oxobutyl)-3,3-dimethylindolin-2-yl)allylidene)-3,3-dimethylindolin-1-yl)butanoate (10)

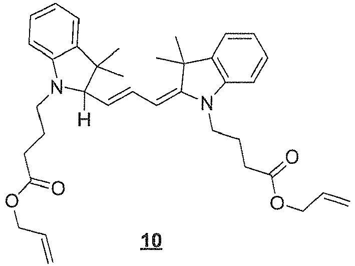

To a solution of 1-(4-(allyloxy)-4-oxobutyl)-2-((1*E*,3*E*)-3-(1-(4-(allyloxy)-4-oxobutyl)-3,3-dimethylindolin-2-ylidene)prop-1-en-1-yl)-3,3-dimethyl-3*H*-indol-1-ium bromide (**9**, 50 mg, 0.08 mmol) in methanol (1 mL) is added sodium borohydride (20 mg, 0.53 mmol) slowly and the reaction mixture is stirred at an ice-water bath temperature for 15 min. The reaction mixture is diluted with chloroform (20 mL) and washed with water (10 mL). The separated organic layer is dried over Na₂SO₄ and filtered. After evaporation of the solvent under vacuum, the crude product is purified by column chromatography over silica gel eluting with 10% ethyl acetate in hexane to give the desired product (**10**).

### Synthesis of (E)-1-(4-ethoxy-4-oxobut-2-en-1-yl)-2,3,3-trimethyl-3H-indol-1-ium bromide (11)

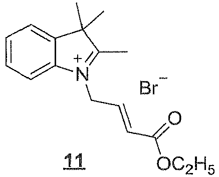

A mixture of 2,3,3-trimethylindolenine (2.0 g, 12.5 mmol) and ethyl 4-bromocrotonate (13.5 g, 69.9 mmol) is heated at 120°C for 18 h. The reaction mixture is cooled to room temperature. It is then added into about 100 mL of ethyl acetate slowly over 5 minutes period while stirring vigorously. The resulting solid is filtered, washed with ethyl acetate and dried under vacuum to give the desired compound (**11**).

### Synthesis of 1-((E)-4-ethoxy-4-oxobut-2-en-1-yl)-2-((1E,3E)-3-(1-((E)-4-ethoxy-4-oxobut-2-en-1-yl)-3,3-dimethylindolin-2-ylidene)prop-1-en-1-yl)-33-dimethyl-3H-indol-1-ium bromide (12)

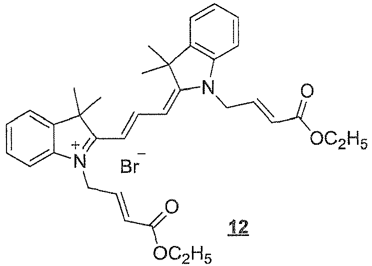

A mixture of (*E*)-1-(4-ethoxy-4-oxobut-2-en-1-yl)-2,3,3-trimethyl-3*H*-indol-1-ium bromide (**11**, 1.2 g, 3.4 mmol) and trimethyl orthoformate (3.6 g, 33.9 mmol) in pyridine (20 mL) is stirred at 90°C for 2 h. It is cooled to room temperature and most of the pyridine is removed under reduced pressure. The resulting residue is purified by column chromatography over silica gel, eluting first with 30% ethyl acetate in chloroform and then with 5% methanol in chloroform to give the desired product (**12**).

### Synthesis of (E)-ethyl 4-((E)-2-((E)-3-(1-((E)-4-ethoxy-4-oxobut-2-en-1-yl)-3,3-dimethylindolin-2-yl)allylidene)-3,3-dimethylindolin-1-yl)but-2-enoate (13)

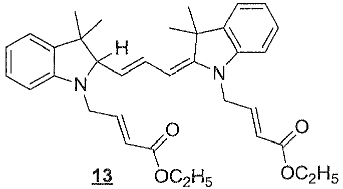

To a solution of 1-((*E*)-4-ethoxy-4-oxobut-2-en-1-yl)-2-((1*E*,3*E*)-3-(1-((*E*)-4-ethoxy-4-oxobut-2-en-1-yl)-3,3-dimethylindolin-2-ylidene)prop-1-en-1-yl)-3,3-dimethyl-3*H-*indol-1-ium bromide (**12**, 50 mg, 0.08 mmol) in methanol (1 mL) is added sodium borohydride (20 mg, 0.5 mmol) slowly and the reaction mixture is stirred at an ice-water bath temperature for 15 min. The reaction mixture is diluted with chloroform (20 mL) and washed with water (10 mL). The separated organic layer is dried over Na₂SO₄ and filtered. After evaporation of the solvent under vacuum, the crude product is purified by column chromatography over silica gel eluting with 10% ethyl acetate in hexane to give the desired product **(13).**

### Synthesis of 1-((E)-4-ethoxy-4-oxobut-2-en-1-yl)-2-((1E,3E,5E)-5-(1-((E)-4-ethoxy-4-oxobut-2-en-1-yl)-3,3-dimethylindolin-2-ylidenelpenta-1,3-dien-1-yl)-3,3-dimethyl-3H-indol-1-ium bromide (14)

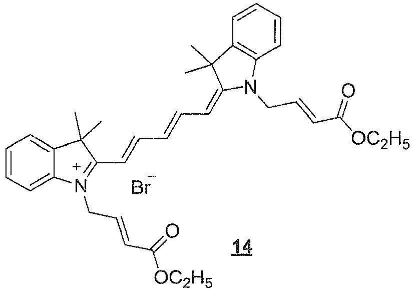

A mixture of (*E*)-ethyl 4-((*E*)-2-((*E*)-3-(1-((*E*)-4-ethoxy-4-oxobut-2-en-1-yl)-3,3-dimethylindolin-2-yl)allylidene)-3,3-dimethylindolin-1-yl)but-2-enoate (**13** 1.0 g, 1.8 mmol) and 1,1,3,3-tetramethoxypropane (0.6 g, 3.7 mmol) in pyridine (20 mL) is stirred at 90°C for 2 h. It is cooled to room temperature and most of the pyridine is removed under reduced pressure. The resulting residue is purified by column chromatography over silica gel, eluting first with 30% ethyl acetate in chloroform and then with 10% methanol in chloroform to give the desired product (**14**).

### Synthesis of (E)-ethyl 4-((E)-2-((2E,4E)-5-(1-((E)-4-ethoxy-4-oxobut-2-en-1-yl)-3,3-dimethylindolin-2-yl)penta-2,4-dien-1-ylidene)-3,3-dimethylindolin-1-yl)but-2-enoate (15)

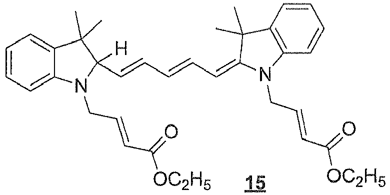

To a solution of 1-((*E*)-4-ethoxy-4-oxobut-2-en-1-yl)-2-((1*E*,3*E*,5*E*)-5-(1-((*E*)-4-ethoxy-4-oxobut-2-en-1-yl)-3,3-dimethylindolin-2-ylidene)penta-1,3-dien-1-yl)-3,3-dimethyl-3*H*-indol-1-ium bromide (**14**, 50 mg, 0.08 mmol) in methanol (1 mL) is added sodium borohydride (20 mg, 0.5 mmol) slowly and the reaction mixture is stirred at an ice-water bath temperature for 15 min. The reaction mixture is diluted with chloroform (20 mL) and washed with water (10 mL). The separated organic layer is dried over Na₂SO₄ and filtered. After evaporation of the solvent under vacuum, the crude product is purified by column chromatography over silica gel eluting with 10% methyl acetate in hexane to give the desired product (**15**).

### Synthesis of 1-(11-ethoxy-11-oxoundecyl)-2,3,3-trimethyl-3H-indol-1-ium bromide (16)

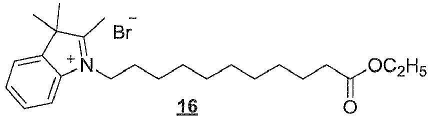

A mixture of 2,3,3-trimethylindolenine (2.0 g, 12.5 mmol) and ethyl 10-bromoundecanoate (18.0 g, 61.4 mmol) is heated at 120°C for 18 h. The reaction mixture is cooled to room temperature. It is then added into about 100 mL of ethyl acetate slowly over 5 min while stirring vigorously. The resulting solid is filtered, washed with ethyl acetate and dried under vacuum to give the desired compound **(16).**

### Synthesis of 1-(11-ethoxy-11-oxoundecyl)-2-((1E,3E)-3-(1-(11-ethoxy-11-oxoundecyl)-3,3-dimethylindolin-2-ylidene)prop-1-en-1-yl)-3,3-dimethyl-3H-indol-1-ium (17)

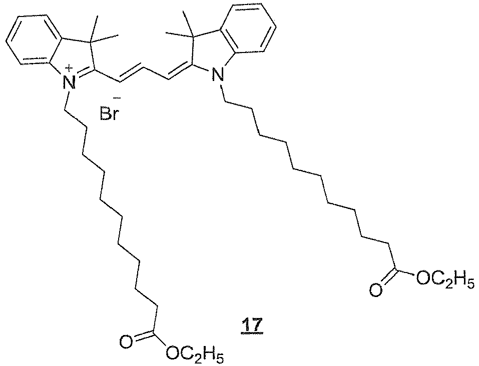

A mixture of 1-(11-ethoxy-11-oxoundecyl)-2,3,3-trimethyl-3*H*-indol-1-ium bromide (**16**, 1.0 g, 2.2 mmol) and trimethyl orthoformate (2.3 g, 22.1 mmol) in pyridine (20 mL) is stirred at 90°C for 2 h. It is cooled to room temperature and most of the pyridine is removed under reduced pressure. The resulting residue is purified by column chromatography over silica gel eluting first with 30% ethyl acetate in chloroform and then with 10% methanol in chloroform to give the desired product **(17).**

### Synthesis of ethyl 11-(2-((1E,3E)-3-(3,3-dimethyl-1-(11-oxotridecyl)indolin-2-ylidene)prop-1-en-1-yl)-3,3-dimethylindolin-1-yl)undecanoate (18)

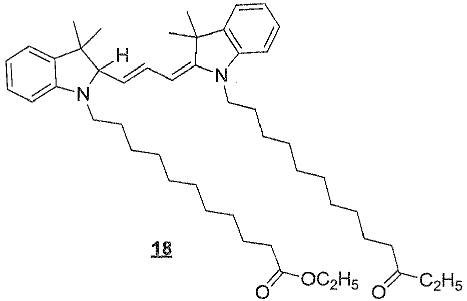

To a solution of 1-(11-ethoxy-11-oxoundecyl)-2-((1*E*,3*E*)-3-(1-(10-ethoxy-11-oxoundecyl)-3,3-dimethylindolin-2-ylidene)prop-1-en-1-yl)-3,3-dimethyl-3*H*-indol-1-ium bromide (**17**, 50 mg, 0.06 mmol) in methanol (1 mL) is added sodium borohydride (15 mg, 0.40 mmol) slowly and the reaction mixture is stirred at an ice-water bath temperature for 15 min. The reaction mixture is diluted with chloroform (20 mL) and washed with water (10 mL). The separated organic layer is dried over Na₂SO₄ and filtered. After evaporation of the solvent under vacuum, the crude product is purified by column chromatography over silica gel eluting with 10% ethyl acetate in hexane to give the desired product (**18**).

### Biological Application Examples of Reduced Dye Compounds (ROS Probes)

### Example 1

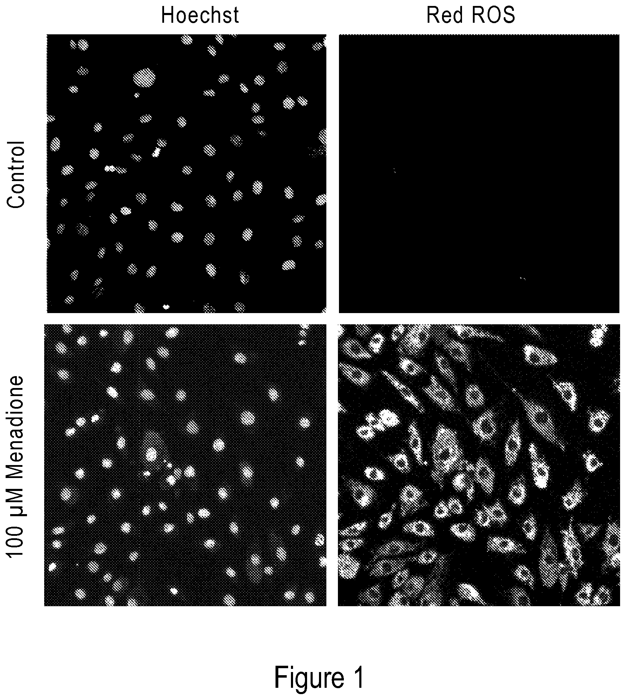

Bovine pulmonary arterial endothelial (BPAE) cells were grown at a density of 7500 cells/well overnight, treated with or without 100 µM menadione for 1 h and then stained with 5 µM Red ROS probe for 30 min. The cells were then washed 3 times with 1X PBS and imaged using a Thermo Scientific Cellomics ArrayScan® VTI HCS Reader (Thermo Fisher Scientific, Pittsburgh, PA) after staining with a Hoechst nuclear dye. The menadione-treated cells showed a positive response because of reactivity of the Red ROS probe to reactive oxygen species produced in the cell (*see,* Figure 1).

### Example 2

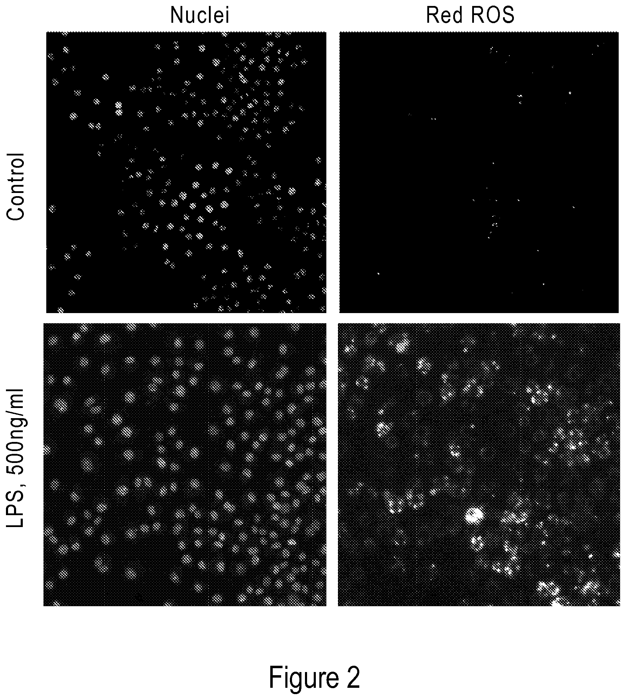

RAW macrophages were plated on a 96-well plate at a density of 10,000 cells/well, treated with 500 ng/ml of lipopolysaccharide (LPS) for 18 h, and then stained with 5 µM Red ROS probe for 30 minutes. The cells were washed 3 times with 1X PBS and then imaged using a Thermo Scientific Cellomics ArrayScan® VTI HCS Reader after staining with a Hoechst nuclear dye. LPS-treated cells showed increased fluorescence as a result of the reactivity of the Red ROS probe to reactive oxygen species produced in LPS-treated cells; no signal was seen in the control cell population (*see,* Figure 2).

### Example 3

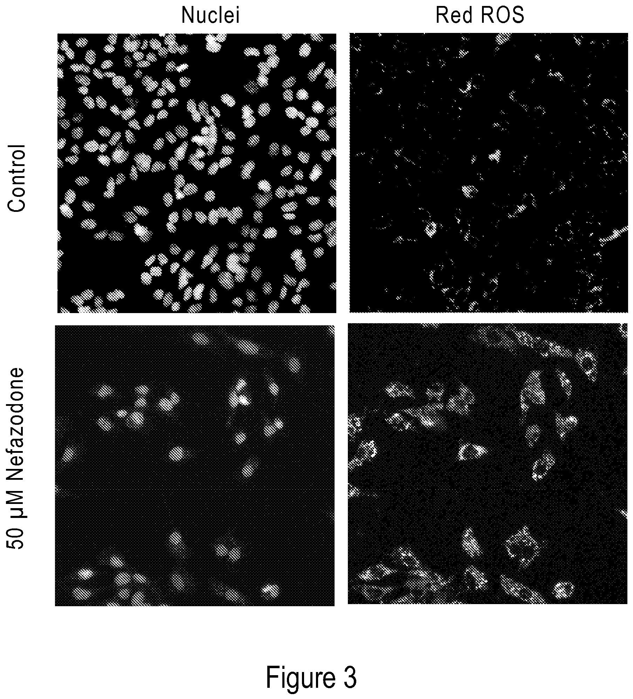

Human hepatocellular liver carcinoma (HepG2) cells were plated in collagen I-coated 96 well plates at a density of 7500 cells/well. Cells were then treated with 50 µM Nefazodone for 24 h and stained with 5 µM of Red ROS probe for 30 min. The cells were washed 3 times with 1X PBS and then imaged using a Thermo Scientific Cellomics ArrayScan® VTI HCS Reader after staining with a Hoechst nuclear dye. There was increased fluorescence intensity following Nefazodone treatment indicating that the Red ROS probe is reacting with Nefazodone-induced reactive oxygen species in cells (*see,* Figure 3).

### Example 4

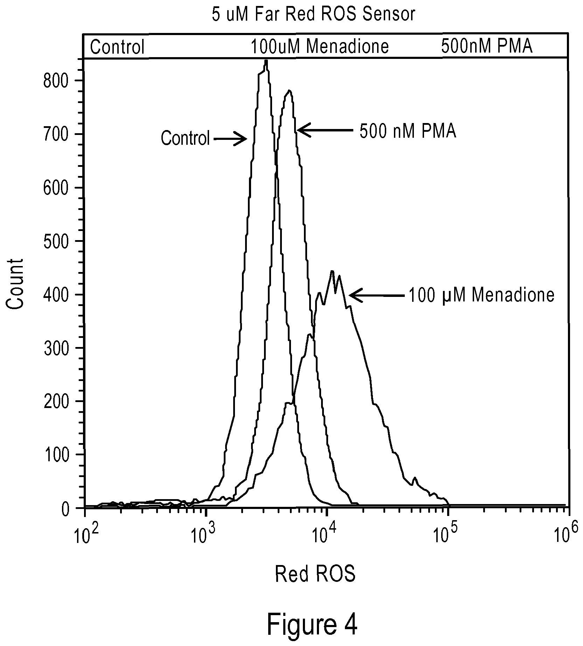

Live Jurkat cells were treated with or without either 100 µM Menadione or 500 nM phorbol myristate acetate (PMA) for 1 hr. The cells were stained with 5 µM Far Red ROS Sensor and Hoechst 33342 for 30 mins. The cells were washed 3 times with PBS and then analyzed at approximately 400 events per second on a BD® LSR II flow cytometer (Beckton Dickinson, Franklin Lakes, NJ) with 635 nm laser excitation and fluorescence emission collected from 650-670 nm. There was an increase in ROS formation after both menadione and PMA treatments (*see,* Figure 4).

### Example 5

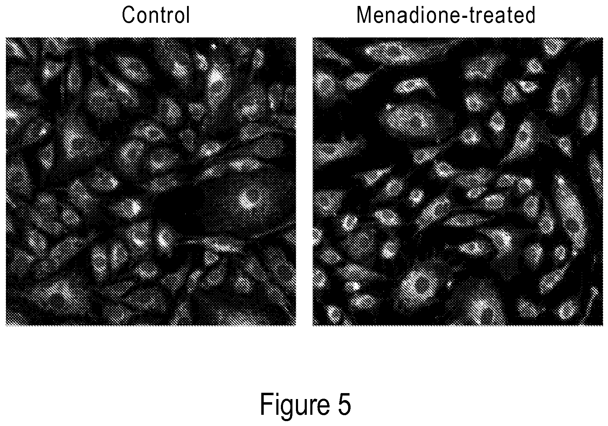

Bovine pulmonary artery endothelial (BPAE) cells were plated in a 96-well plate at a density of 7500 cells/well and then treated with 100 µM Menadione for 1 hr and stained with 20 nM Mitotracker® Green (Life Technologies Corp., Carlsbad, CA), 5 µM Far Red ROS Sensor and Hoechst 33342 for 30 min in complete medium. Cells were then washed 3 times with PBS and imaged on a Thermo Scientific Cellomics ArrayScan® VTI HCS Reader. The control sample had no signal while in menadione-treated cells there was robust increase in signal as a result of oxidative stress caused by menadione. Both Mitotracker® Green and Far Red ROS Sensor stained well showing that they work together in a multiplex assay (*see,* Figure 5).

### Examples 6

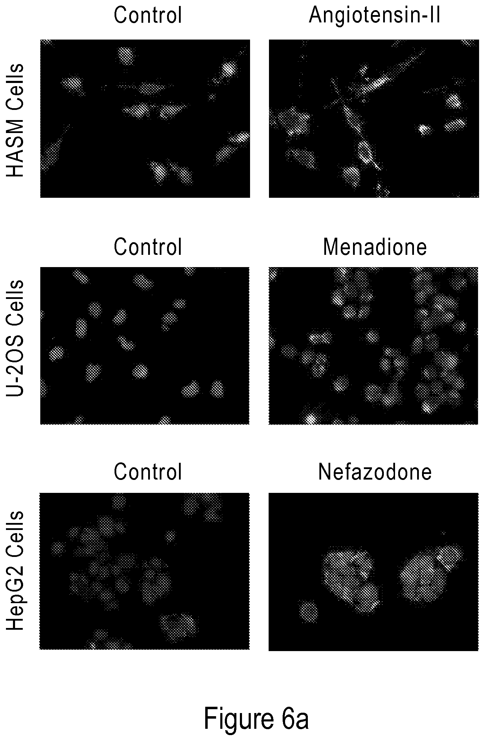

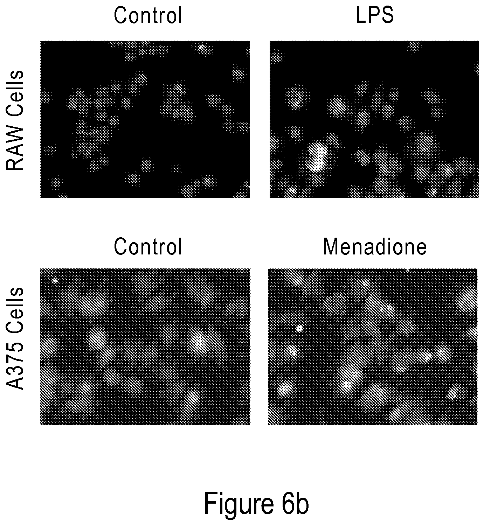

Human arterial smooth muscle cells (HASM), U-2 OS cells, HepG2 cells, RAW cells or Green Fluorescent Protein (GFP)-expressing A375 cells were plated in 35 mm Mattek glass bottom dishes and treated with 500 nM Angiotensin II (4 h) in HASMs or 100 µM Menadione (1 h) in U-2 OS and A375 cells or 50 µM Nefazodone (24 h) in HepG2 cells or 500 ng/ml of LPS in RAW cells (24 h). The cells were then stained with 5 µM Far Red ROS Sensor for 30 min at 37°C in complete medium. The cells were then washed 3 times with PBS and imaged on a Zeiss Inverted microscope using 40x objective. All the compounds used produced significant oxidative stress as seen by increased signal. Data in GFP-expressing A375 cells showed that the Far Red ROS Sensor is useful in measuring ROS formation in GFP-expressing cell lines (*see,* Figure 6).

### Example 7

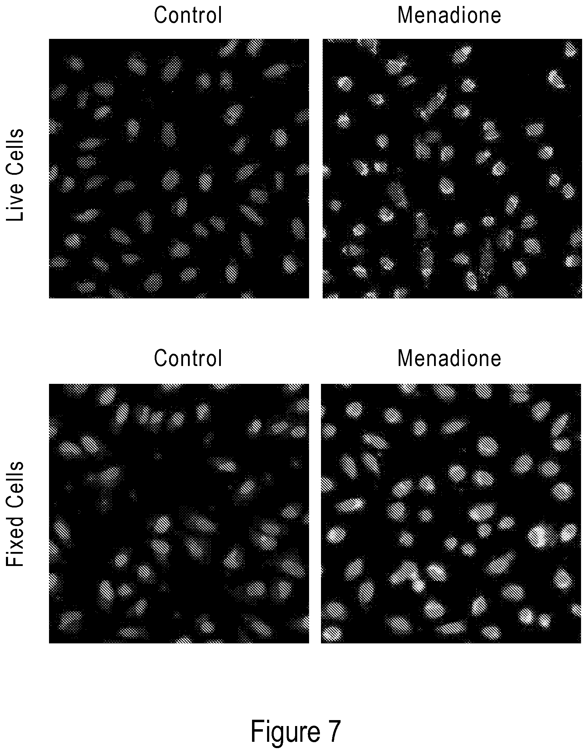

U-2 OS cells were plated in 96-well plates, treated with 100 µM Menadione for 1 hr and then treated with 20 µM of Far Red ROS Sensor for 30 min. Cells were then washed 3X and analyzed on a Thermo Scientific Cellomics ArrayScan® VTI HCS Reader. The cells were then fixed with 4% formaldehyde for 10 min and the plate was read again. Fold changes were calculated from mean signal intensities of Far Red ROS Sensor. Results showed that the signal intensities were retained well after formaldehyde fixation *(see,* Figure 7).

### Example 8

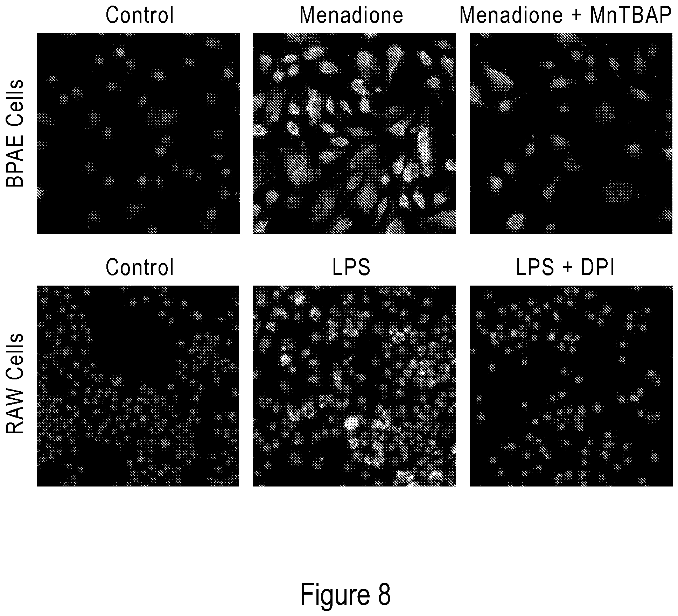

BPAE cells or RAW macrophages were plated in 96-well plates. BPAE cells were treated with or without 100 µM Menadione for 1h. 100 µM of superoxide scavenger, MnTBAP was added to some of the control and menadione-treated wells for the last 30 min of incubation. RAW cells were treated with or without 500 ng/mL of Lipopolysachharide (LPS) with or without DiphenyleneIodinium (DPI), an NADPH oxidase inhibitor. The cells were then stained with Far Red ROS Sensor for 30 min, washed with PBS and analyzed on a Thermo Scientific Cellomics ArrayScan® VTI HCS Reader. MnTBAP or DPI treatment inhibited ROS caused by Menadione or LPS, respectively confirming the specificity of the ROS signal (*see,* Figure 8).

### Example 9

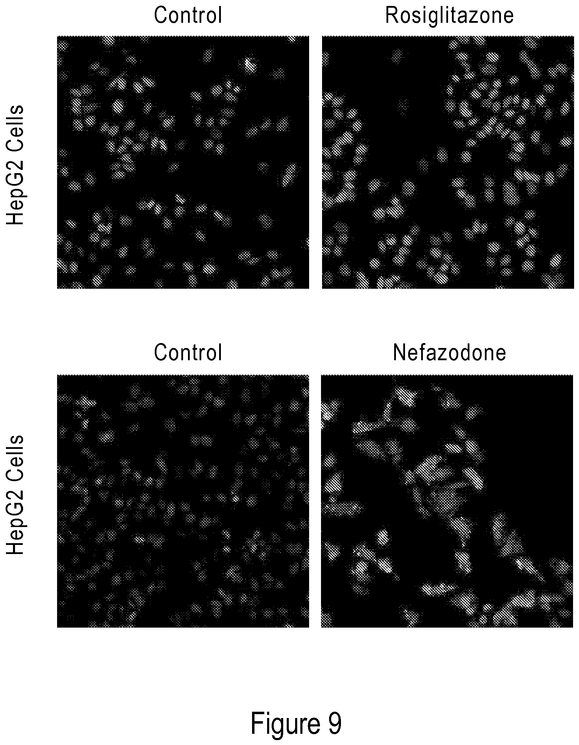

HepG2 cells were plated in 96-well plates and then treated with either 50 µM rosiglitazone or 50 µM Nefazodone for 24 h. The cells were then stained with 5 µM Far Red ROS Sensor for 30 min. The cells were then washed 3 times with PBS and analyzed on a Thermo Scientific Cellomics ArrayScan® VTI HCS Reader. Nefazodone produced significant ROS formation while rosiglitazone treatment did not elicit any ROS response (*see,* Figure 9).

### Examples 10

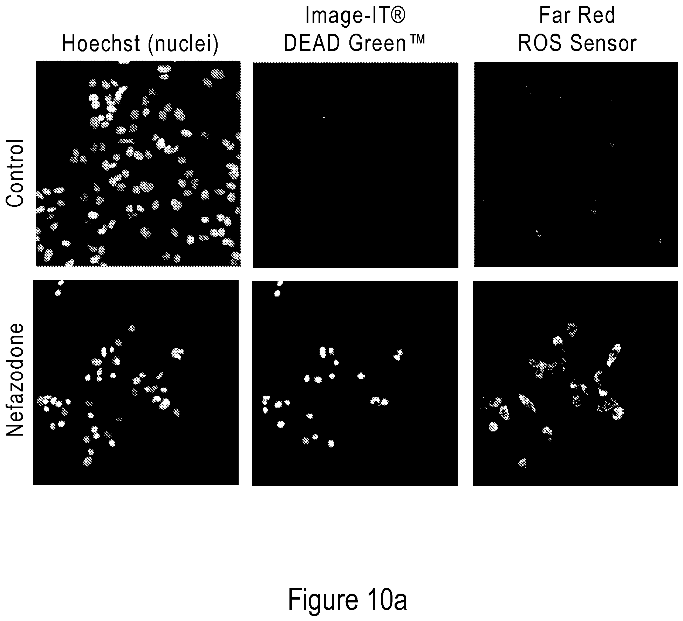

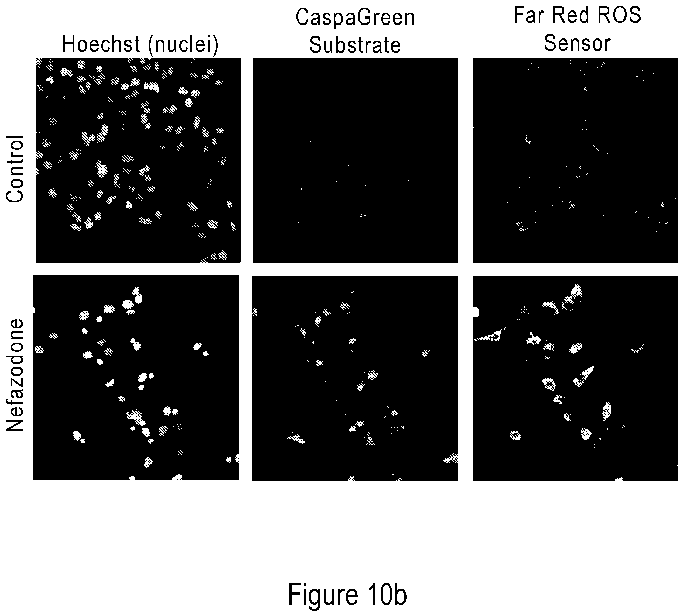

HepG2 cells were plated in 96-well plates and then treated with 50 µM Nefazodone for 24 h. For the last 30 min of Nefazodone treatment, the cells were either stained with 5 µM Far Red ROS Sensor and 20 nM Image-IT® DEAD Green™ viability stain (Life Technologies Corp., Carlsbad, CA), Figure 10a) or 5 µM Far Red ROS Sensor and 5 µM fluorogenic CaspaGreen caspase substrate (Figure 10b). The cells were washed 3 times with PBS and analyzed on a Thermo Scientific Cellomics ArrayScan® VTI HCS Reader. Image-iT® DEAD Green™ measures plasma membrane permeability, a marker for cytotoxicity. Fluorogenic CaspaGreen caspase substrate measures apoptosis in cells as seen by increased nuclear staining in nefazodone-treated cells. Nefazodone causes oxidative stress, cytotoxicity and apoptosis in cells (*see,* Figure 10).

### Example 11

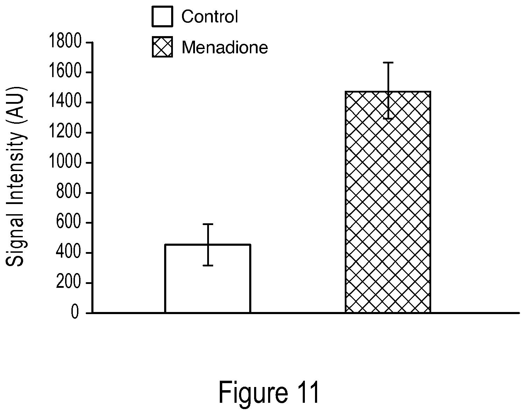

U-2 OS cells were plated in a 96-well plate at a density of 7500 cells/well and treated with 100 µM Menadione or not treated with Menadione (Control) and then stained with 20 µM Far Red ROS Sensor for 30 min. The cells were then washed 3 times with PBS and read on a Flexstation II fluorescent plate reader (Molecular Devices, Sunnyvale, CA) with excitation at 640 ± 5 nm and emission at 665 ± 5 nm. Signal intensities of ∼400 AU and ∼1400 AU were obtained for Control and Menadione-treated cells, respectively, which are significant with P ≤ 0.001 (*see,* Figure 11).

### Example 12

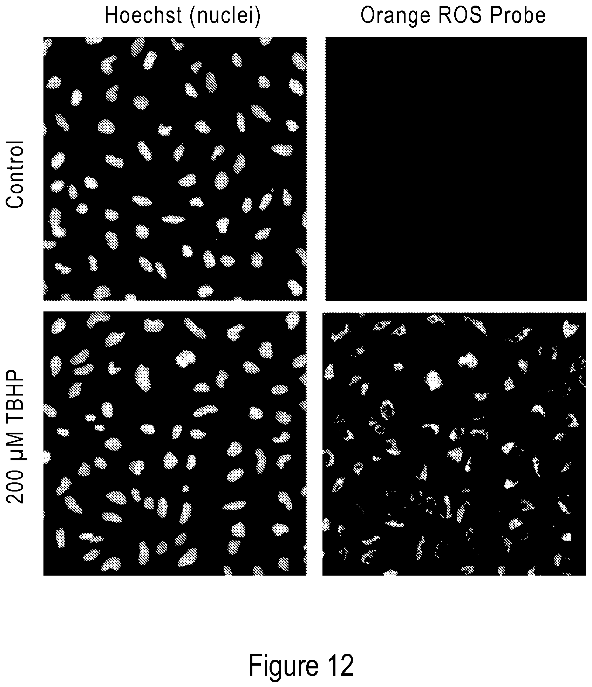

U2-OS cells were plated in a 96-ell plate at a density of 10,000 cells/well and treated with 200 µM TBHP for 1 h followed by staining with 5µM Orange ROS Probe and Hoechst 33324 in complete growth medium. The cells were then washed 3 times with 1X PBS and analyzed on a Thermo Scientific Cellomics ArrayScan® VTI HCS Reader. There was a 10-fold increase in signal intensities in TBHP-treated cells when compared to vehicle controls (*see,* Figure 12).

### Example 13

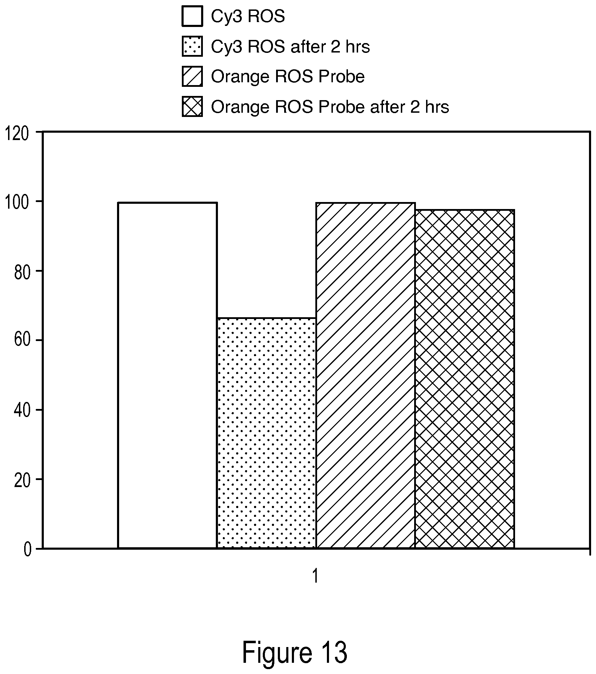

U2-OS cells were plated in a 96-well plate at a density of 10,000 cells/well and treated with 200 µM TBHP for I h followed by staining with 5 µM of either Cy3 ROS probe or Orange ROS probe in complete growth medium. The cells were then washed 3 times with 1X PBS and then analyzed on a Thermo Scientific Cellomics Array Scan® VTI HCS Reader. The samples were scanned again after leaving the plate for 2 h at room temperature in the dark. The mean signal intensities of the ROS signal was used to calculate percent loss in signal intensities. There was 34% loss in signal with Cy3 ROS probe whereas there was no significant loss of signal with Orange ROS probe (*see,* Figure 13).

### Biological Application Examples of Reduced Dye Compounds (ROS Probes)

In addition to the fluorescence microscopy, high content imaging, fluorescent plate reader, and *in vitro* flow cytometry applications described above, the reduced dye compounds (ROS probes) disclosed herein, including Red ROS probe, Orange ROS probe, and compositions containing those dyes may be used *in vitro* as diagnostic tools to detect or quantify ROS in a variety of samples. Further, the reduced dye compounds (ROS probes) disclosed herein, including Red ROS probe, Orange ROS probe, and compositions containing those dyes may be used *in vivo* to detect a variety of diseases and disorders or markers for diseases and disorders characterized by production of overproduction of ROS, as well as in positron emission tomography (PET) as contrast agents, imaging of biomolecules, and photoacoustic imaging.

### Example 14

The ability of the reduced dye compounds (ROS probes) disclosed herein to image ROS production *in vivo* generated by activated macrophages and neutrophils in an LPS model of acute inflammation is evaluated. Briefly, mice are divided into three groups: Group I is given an intraperitoneal (i.p.) injection of LPS (1 mg in 400 µL saline); Group II is given an i.p. injection of saline (400 µL); and Group III is untreated. After 6 h, the mice are anesthetized, their abdominal fur is removed, and the LPS- and saline-treated mice are injected i.p. with a ROS probe (∼5 nM in 50 µL methanol). The mice are imaged as triplets, one from each group, using an *in vivo* imaging system, such as the Kodak In-Vivo Imaging System FX (Kodak Molecular Imaging Systems, New Haven, CT).

### REFERENCES

1) J. J. Gao, K. H. Xu, B. Tang, L. L. Yin, G. Yang, A.Wen, G. Li, FEBS J. 2007, 274, 1725 - 1733.
2) K. Xu, X. Liu, B. Tang, G. Yang, Y. L. An, Chem. Eur. J. 2007, 13, 1411 -1416.
3) Y. Koide, Y. Urano, S. Kemmoku, H. Kojima, T. Nagano, J. Am. Chem. Soc. 2007, 129, 10324 - 10325.
4) H. Maeda, K. Yamamoto, I. Kohno, L. Hafsi, N. Itoh, S. Nakagawa, N. Kanagawa, K. Suzuki, T. Uno, Chem. Eur. J. 2007, 13, 1946 - 1954.
5) K. M. Robinson, M. S. Janes,M. Pehar, J. S. Monette,M. F. Ross, T. M. Hagen,M. P. Murphy, J. S. Beckman, Proc. Natl. Acad. Sci. USA 2006, 103, 15038 - 15043.
6) J. Shepherd, S. A. Hilderbrand, P. Waterman, J.W. Heinecke, R. Weissleder, P. Libby, Chem. Biol. 2007, 14, 1221 - 1231.
7) J. Zielonka, J. Vasquez-Vivar, B. Kalyanaraman, Nat. Protoc. 2008, 3, 8 - 21.
8) H. Zhao, J. Joseph, H. M. Fales, E. A.Sokoloski, R. L. Levine, J. Vasquez -Vivar, B. Kalyanaraman, Proc. Natl. Acad. Sci. USA 2005, 102, 5727 - 5732.
9) S. E. Buxser, G. Sawada, T. J. Raub, Methods Enzymol. 1999, 300, 256 - 275.
10) K. Kundu, S. F. Knight, N. Willett, S. Lee, W. R. Taylor, N. Murthy, Angew. Chem. 2009, 121, 305 - 309; Anger. Chem. Int. Ed. 2009, 48, 299 - 303.
11) P. W. Lin, L. E. Myers, L. Ray, S. Song, T. R. Nasm, A. J. Berardinelli, K. Kundu, N. Murthy, J. M.Hansen, A. S. Neish, Free Radical Biol. Med 2009, 47, 1205 - 1211.
12) B. C. Dickinson, D. Srikun, C. J. Chang, Curr. Opin. Chem. Biol. 2010, 14, 50 - 56.
13) E.W. Miller, S. X. Bian, C. J. Chang, J. Am. Chem. Soc. 2007, 129, 3458 - 3459.
14) R. P. Haugland, The Handbook: A Guide to Fluorescent Probes and Labeling Technologies, Chapters 12.2 and 18, 11th ed., Life Technologies/Invitrogen/Molecular Probes, Carlsbad, CA, 2010**.**
15) B. Halliwell, M. Whiteman, Br. J. Pharmacol. 2004, 142, 231 - 255.
16) K. Kundu, S.F. Knight, S. Lee, W. R. Taylor, N. Murthy, Angew. Chemie. Int. Ed. 2010, 49, 6134-6138.
17) B. Halliwell, J. Neurochem. 2006, 97, 1634-1658.
18) S. Chrissobolis, F. M. Faraci, Trends Mol. Med. 2008, 14, 495-502.
19) A. Federico, F. Morgillo, C. Tuccillo, F. Ciardiello, C. Loguercio, Int. J Cancer, 2007, 121, 2381-2386.
20) K. H. Al-Gubory, P. A. Fowler, C. Garrell, Int. J. Biochem. Cell. Biol. 2010, 42, 1634-1650.

## Claims

1. A reduced dye compound of structural formula (**I**): 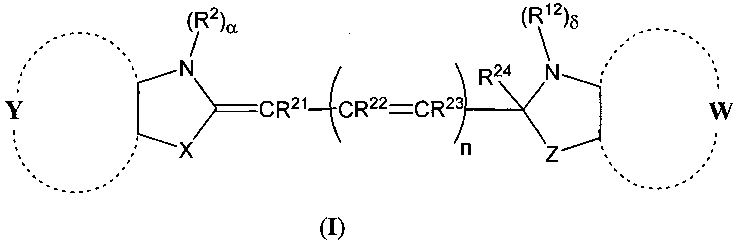 wherein
Y represents the atoms necessary to form one to two fused aromatic rings having 6 atoms in each ring, wherein said Y atoms are selected from the group consisting of -CH, -C, -CR¹, and -N(R²)_{β}, where β is 0 or 1, but no more than one of said atoms in Y is -N(R²)_{β}, and each R¹ is independently amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy;
α is 1, and α + β = 1 or 2;
W represents the atoms necessary to form one to two fused aromatic rings having 6 atoms in each ring, wherein said W atoms are selected from the group consisting of -CH, -C, -CR^{1'}, and N(R¹²)_{β'}, where P' is 0 or 1, but no more than one of said atoms in W is -N(R¹²)_{β'}, and each R^{1'} is independently amino, sulfo, trifluoromethyl, hydroxyl, halogen, carboxy, C₁-C₆ alkyl, C₁-C₆ alkoxy, C₁-C₆ alkylamino, or C₂-C₁₂ dialkylamino, wherein each alkyl portion of which is optionally substituted with substituents selected from the group consisting of carboxy, sulfo, amino, and hydroxy;
δ is 1, and δ + β' = 1 or 2;
R² and R¹² are independently alkoxycarbonylalkyl, alkoxythiocarbonylalkyl, thioalkoxycarbonylalkyl, alkenoxycarbonylalkyl, alkenoxythiocarbonylalkyl, thioalkenoxycarbonylalkyl, alkoxycarbonylalkenyl, alkoxycarbonylalkenyl, thioalkoxycarbonylalkenyl, each alkyl or alkenyl portion of which is C₁-C₂₂ alkyl or alkenyl that optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, C₂-C₁₂ dialkylamino, or C₃-C₁₈ trialkylammonium;
X is O, S, Se, -CR³R⁴, or -NR⁵, wherein
R³ and R⁴ are independently C₁-C₂₂ alkyl or C₇-C₂₂ arylalkyl, each alkyl portion of which optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; or R³ and R⁴ taken in combination complete a five- or six-membered saturated or unsaturated ring that is optionally substituted with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; and
R⁵ is H or C₁-C₂₂ alkyl that is optionally substituted one or more times with hydroxy, carboxy, sulfo, amino, C₁-C₆ alkylamino or C₂-C₁₂ dialkylamino;
Z is O, S, Se, -CR¹³R¹⁴, or -NR¹⁵, wherein
R¹³ and R¹⁴ are independently C₁-C₂₂ alkyl or C₇-C₂₂ arylalkyl, each alkyl portion of which optionally incorporates up to six hetero atoms, selected from N, O and S, and each alkyl portion of which is optionally substituted one or more times with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; or R¹³ and R¹⁴ taken in combination complete a five-or six-membered saturated or unsaturated ring that is optionally substituted with F, Cl, Br, I, hydroxy, carboxy, sulfo, phosphate, amino, sulfate, phosphonate, cyano, nitro, azido, C₁-C₆ alkoxy, C₁-C₆ alkylamino, or C₂-C₁₂ dialkylamino, or C₃-C₁₈ trialkylammonium; and
R¹⁵ is H or C₁-C₂₂ alkyl that is optionally substituted one or more times with hydroxy, carboxy, sulfo, amino, C₁-C₆ alkylamino or C₂-C₁₂ dialkylamino;
each of R²¹, R²², R²³ is independently H, F, Cl, C₁-C₆ alkyl, C₁-C₆ alkoxy, aryl, aryloxy, a nitrogen heterocycle, an iminium ion; or any two adjacent substituents of R²¹, R²², R²³, when taken in combination, forms an aryl group or a 4-, 5-, or 6-membered saturated or unsaturated hydrocarbon ring that is optionally substituted one or more times with C₁-C₆ alkyl, halogen, or a carbonyl oxygen; or R²¹ taken in combination with one of R³ and R⁴ forms a six-membered ring that is optionally substituted with C₁-C₆ alkyl; or R²³ adjacent to Z, taken in combination with one of R¹³ and R¹⁴ forms a six-membered ring that is optionally substituted by a C₁-C₆ alkyl;
R²⁴ is H or D in either *R* or *S* configuration; and
n is 0, 1, 2, or 3.

2. The compound according to claim 1, wherein the compound has structural formula (**III**): 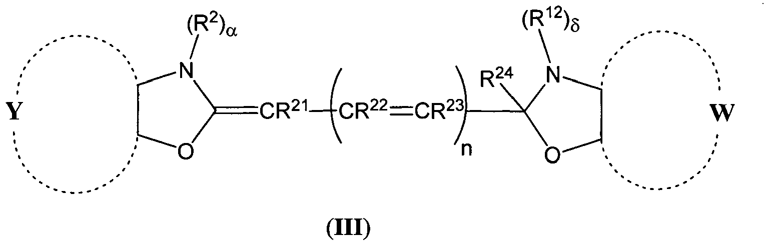 wherein R²⁴ is H and n is 1 or 2.

3. The compound according to claim 1, wherein the compound has structural formula (**IV**): 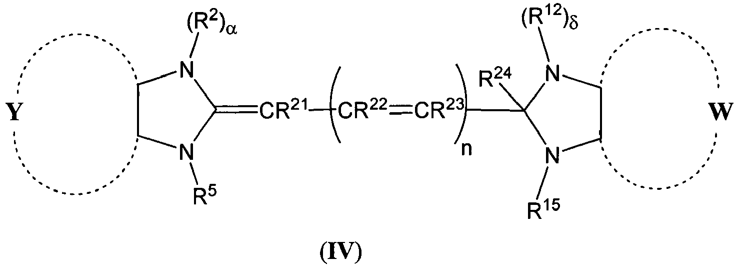 wherein R²⁴ is H and n is 1 or 2.

4. The compound according to claim 1, wherein the compound has structural formula (**V**): 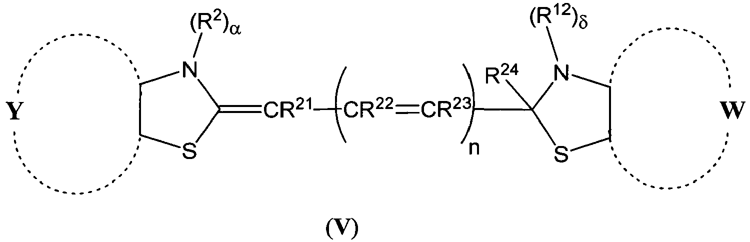 wherein R²⁴ is H and n is 1 or 2.

5. The compound according to claim 1, wherein the compound has structural formula (**VI**): 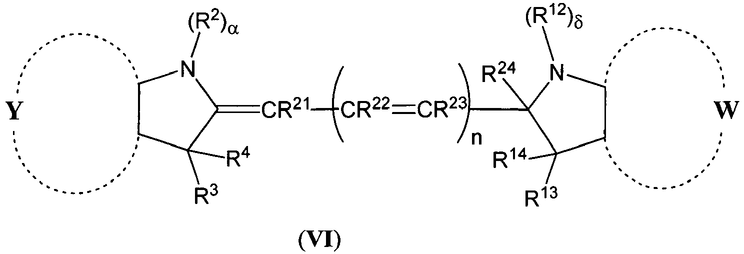 wherein R²⁴ is H and n is 1 or 2.

6. The compound according to claim 5, wherein R³, R⁴, R¹³, and R¹⁴ are independently C₁-C₂₂ alkyl.

7. The compound according to claim 6, wherein R² and R¹² are independently methoxycarbonylalkyl, ethoxycarbonylalkyl, propoxycarbonylalkyl, vinyloxycarbonylalkyl, allyloxycarbonylalkyl, methoxycarbonylalkenyl, ethoxycarbonylalkenyl or propoxycarbonylalkenyl.

8. A dye compound selected from the group consisting of:
1-(4-ethoxy-4-oxobutyl)-2,3,3-trimethyl-3*H-*indolium bromide;
1-(4-ethoxy-4-oxobutyl)-((1*E*,3*E*,4*E*)-5-(1-(4-ethoxy-4-oxobutyl)-3,3-dimethylindolin-2-ylidene)penta-1,3-dienyl-3,3-dimethyl-3*H*-indolium bromide;
1-(4-ethoxy-4-oxobutyl)-3,3-dimetyl-2-((1*E*,3*E*,5*E*)-5-(1-(4-ethoxy-4-oxobutyl)-3,3-dimethylindolin-2-ylidene)penta-1,3-dienyl)indoline;
1-(4-ethoxy-4-oxobutyl)-2-deutero-3,3-dimetyl-2-((1*E*,3*E*,5*E*)-5-(1-(4-ethoxy-4-oxobutyl)-3,3-dimethylindolin-2-ylidene)penta-1,3-dienyl)indoline;
1-(4-ethoxy-4-oxobutyl)-2-((1*E*,3*E*)-3-(1-4-ethoxy-4-oxobutyl)-3,3-dimethylindolin-2-ylidene)prop-1-enyl)-3,3-dimethyl-3*H*-indolium bromide;
1-(4-ethoxy-4-oxobutyl)-3,3-dimethyl-2-((1*E*,3*E*)-3-(1-(4-ethoxy-4-oxobutyl)-3,3-dimethylindolin-2-ylidene)prop-1-enyl)indoline;
1-(3-carboxypropyl)-2,3,3-trimethyl-3*H*-indol-1-ium bromide;
1-(4-(allyloxy)-4-oxobutyl)-2,3,3-trimethyl-3*H-*indol-1-ium bromide;
1-(4-(allyloxy)-4-oxobutyl)-2-((1*E*,3*E*)-3-(1-(4-(allyloxy)-4-oxobutyl)-3,3-dimethylindolin-2-ylidene)prop-1-en-1-yl)-3,3-dimethyl-3*H-*indol-1-ium bromide;
allyl 4-((*E*)-2-((*E*)-3-(1-(4-(allyloxy)-4-oxobutyl)-3,3-dimethylindolin-2-yl)allylidene)-3,3-dimethylindolin-1-yl)butanoate;
(*E*)-1-(4-ethoxy-4-oxobut-2-en-1-yl)-2,3,3-trimethyl-3*H-*indol-1-ium bromide;
1-((*E*)-4-ethoxy-4-oxobut-2-en-1-yl)-2-((1*E*,3*E*)-3-(1-((*E*)-4-ethoxy-4-oxobut-2-en-1-yl)-3,3-dimethylindolin-2-ylidene)prop-1-en-1-yl)-3,3-dimethyl-3*H*-indol-1-ium bromide;
(*E*)-ethyl 4-((*E*)-2-((*E*)-3-(1-((*E*)-4-ethoxy-4-oxobut-2-en-1-yl)-3,3-dimethylindolin-2-yl)allylidene)-3,3-dimethylindolin-1-yl)but-2-enoate;
1-((*E*)-4-ethoxy-4-oxobut-2-en-1-yl)-2-((1*E*,3*E*,5*E*)-5-(1-((*E*)-4-ethoxy-4-oxobut-2-en-1-yl)-3,3-dimethylindolin-2-ylidene)penta-1,3-dien-1-yl)-3,3-dimethyl-3*H*-indol-1-ium bromide;
(*E*)-ethyl4-((*E*)-2-((2*E*,4*E*)-5-(1-((*E*)-4-ethoxy-4-oxobut-2-en-1-yl)-3,3-dimethylindolin-2-yl)penta-2,4-dien-1-ylidene)-3,3-dimethylindolin-1-yl)but-2-enoate;
1-(11-ethoxy-11-oxoundecyl)-2,3,3-trimethyl-3*H*-indol-1-ium bromide;
1-(11-ethoxy-11-oxoundecyl)-2-((1*E*,3*E*)-3-(1-(11-ethoxy-11-oxoundecyl)-3,3-dimethylindolin-2-ylidene)prop-1-en-1-yl)-3,3-dimethyl-3*H*-indol-1-ium; and
ethyl 11-(2-((1*E*,3*E*)-3-(3,3-dimethyl-1-(11-oxotridecyl)indolin-2-ylidene)prop-1-en-1-yl)-3,3-dimethylindolin-1-yl)undecanoate, wherein the dye compound is present in its reduced form.

9. A composition for the detection of radical oxygen species (ROS), the composition comprising:
a) one or more reduced dyes; and
b) a carrier,
wherein said reduced dyes are compounds according to any one of claims 1 to 6 and are present in an amount effective to detect the presence of ROS upon reaction with ROS.

10. A method of detecting reactive oxygen species (ROS) in a sample, the method comprising the steps of:
a) contacting the sample with an effective amount of one or more of the reduced dye compounds according to any one of claims 1 to 6; or the composition according to claim 9; and
b) determining if the reduced dye compound has been oxidized.

11. The method according to claim 10, wherein the sample comprises cells, tissues, biological fluids, or combinations thereof.

12. The method according to claim 10, wherein oxidation of the reduced dye compound is detected by fluorescence spectroscopy, fluorescence microscopy, confocal laser scanning fluorescence microscopy, or
total internal reflection fluorescence microscopy.

13. The method according to claim 10, wherein the detection of the reactive oxygen species (ROS) is used to diagnose a disease or disorder selected from the group consisting of carotid artery injuries, atherosclerosis, hypertension, cancers, diseases and disorders **characterized by** inflammation, radiation- induced late normal tissue damage; tissue damages due to chemotherapy, reperfusion after ischemia, or transplantation; diabetes, such as type 1 diabetes (T1D), neurodegenerative diseases, such as Alzheimer's disease, Parkinson's disease, amyotrophic lateral sclerosis (ALS), and Huntington's disease; cerebrovascular disease, cystic fibrosis, chronic kidney disease, cardiovascular disease, preeclampsia, ophthalamic diseases, and combinations thereof.

14. A kit for detecting reactive oxygen species (ROS) in a sample, the kit comprising:
a) one or more reduced dye compounds according to any one of claims 1 to 6 ; or the composition according to claim 9; and
b) one or more containers.

15. The kit according to claim 14, wherein the kit further comprises instructions for performing an assay for detecting one or more reactive oxygen species (ROS).

16. A process for preparing a reduced dye compound of structural formula (**I**) 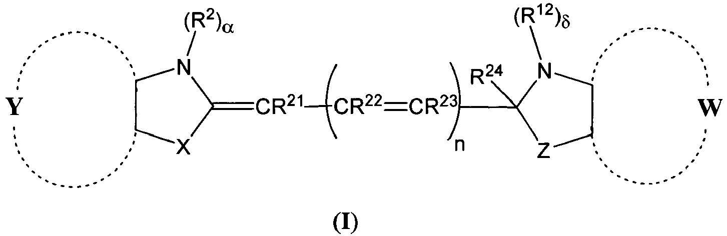 the process comprising:
a) reacting a cyanine dye compound of structural formula (**II**) 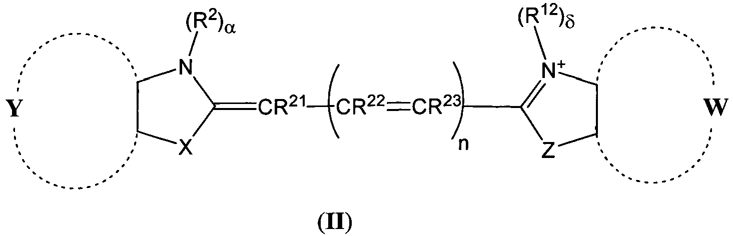 with NaBH₄ or NaBD₄, wherein:
W, X, Y, Z, R², R¹², R²¹, R²², R²³, R²⁴, n, α, and δ are as defined in claim 1.

## Patentansprüche

1. Reduzierte Farbstoffverbindung der Strukturformel (I): 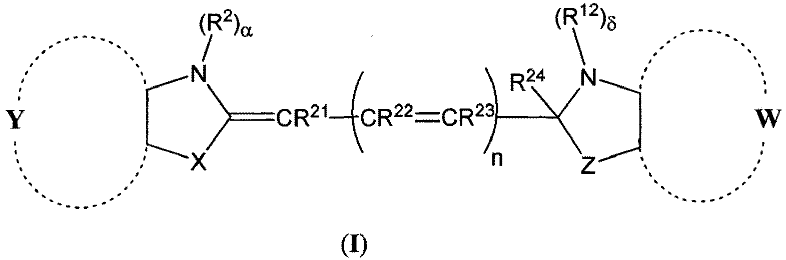 worin
Y die Atome darstellt, die nötig sind, um einen bis zwei kondensierte aromatische Ringe mit jeweils 6 Atomen im jedem Ring zu bilden, wobei die Y Atome ausgewählt sind aus der Gruppe bestehend aus -CH, -C, -CR¹ und -N(R²)_{β}, wobei β 0 oder 1 ist, aber nicht mehr als eines von den Atomen in Y -N(R²)_{β} ist, und jedes R¹ unabhängig Amino, Sulfo, Trifluormethyl, Hydroxyl, Halogen, Carboxy, C₁-C₆-Alkyl, C₁-C₆-Alkoxy, C₁-C₆-Alkylamino oder C₂-C₁₂-Dialkylamino ist, von denen der Alkylteil jeweils optional mit Substituenten substituiert ist, die ausgewählt sind aus der Gruppe bestehend aus Carboxy, Sulfo, Amino und Hydroxy;
α 1 ist und α + β = 1 oder 2;
W die Atome darstellt, die nötig sind, um einen bis zwei kondensierte aromatische Ringe mit jeweils 6 Atomen im Ring zu bilden, wobei die W Atome ausgewählt sind aus der Gruppe bestehend aus -CH, -C, -CR^{1'} und -N(R¹²)_{β'}, wobei β' 0 oder 1 ist, aber nicht mehr als eines von den Atomen in W -N(R¹²)_{β'} ist, und jedes R¹ unabhängig Amino, Sulfo, Trifluormethyl, Hydroxyl, Halogen, Carboxy, C₁-C₆-Alkyl, C₁-C₆-Alkoxy, C₁-C₆-Alkylamino oder C₂-C₁₂-Dialkylamino ist, von denen der Alkylteil jeweils optional mit Substituenten substituiert ist, die ausgewählt sind aus der Gruppe bestehend aus Carboxy, Sulfo, Amino und Hydroxy;
δ 1 ist und δ + β' = 1 oder 2;
R² und R¹² unabhängig Alkoxycarbonylalkyl, Alkoxythiocarbonylalkyl, Thioalkoxycarbonylalkyl, Alkenoxycarbonylalkyl, Alkenoxythiocarbonylalkyl, Thioalkenoxycarbonylalkyl, Alkoxycarbonylalkenyl, Alkoxycarbonylalkenyl, Thioalkoxycarbonylalkenyl sind, von denen der Alkyl- oder Alkenylteil jeweils C₁-C₂₂-Alkyl oder -Alkenyl ist, das optional bis zu sechs Heteroatome enthält, die ausgewählt sind aus N, O und S, und von denen der Alkylteil jeweils optional einmal oder mehrmals substituiert ist mit F, Cl, Br, I, Hydroxy, Carboxy, Sulfo, Phosphat, Amino, Sulfat, Phosphonat, Cyano, Nitro, Azido, C₁-C₆-Alkoxy, C₁-C₆-Alkylamino, C₂-C₁₂-Dialkylamino oder C₃-C₁₈-Trialkylammonium;
X für O, S, Se, -CR³R⁴ oder -NR⁵ steht, worin
R³ und R⁴ unabhängig C₁-C₂₂-Alkyl oder C₇-C₂₂-Arylalkyl sind, von denen der Alkylteil jeweils optional bis zu sechs Heteroatome enthält, die ausgewählt sind aus N, O und S, und von denen der Alkylteil jeweils optional einmal oder mehrmals substituiert ist mit F, Cl, Br, I, Hydroxy, Carboxy, Sulfo, Phosphat, Amino, Sulfat, Phosphonat, Cyano, Nitro, Azido, C₁-C₆-Alkoxy, C₁-C₆-Alkylamino oder C₂-C₁₂-Dialkylamino oder C₃-C₁₈-Trialkylammonium, oder R³ und R⁴ kombiniert einen fünf- oder sechsgliedrigen gesättigten oder ungesättigten Ring komplettieren, der optional substituiert ist mit F, Cl, Br, I, Hydroxy, Carboxy, Sulfo, Phosphat, Amino, Sulfat, Phosphonat, Cyano, Nitro, Azido, C₁-C₆-Alkoxy, C₁-C₆-Alkylamino oder C₂-C₁₂-Dialkylamino oder C₃-C₁₈-Trialkylammonium, und
R⁵ für H oder C₁-C₂₂-Alkyl steht, das optional einmal oder mehrmals substituiert ist mit Hydroxy, Carboxy, Sulfo, Amino, C₁-C₆-Alkylamino oder C₂-C₁₂-Dialkylamino,
Z für O, S, Se, -CR¹³R¹⁴ oder -NR¹⁵ steht, worin
R¹³ und R¹⁴ unabhängig C₁-C₂₂-Alkyl oder C₇-C₂₂-Arylalkyl sind, von denen der Alkylteil jeweils optional bis zu sechs Heteroatome enthält, die ausgewählt sind aus N, O und S, und von denen der Alkylteil jeweils optional einmal oder mehrmals substituiert ist mit F, Cl, Br, I, Hydroxy, Carboxy, Sulfo, Phosphat, Amino, Sulfat, Phosphonat, Cyano, Nitro, Azido, C₁-C₆-Alkoxy, C₁-C₆-Alkylamino oder C₂-C₁₂-Dialkylamino oder C₃-C₁₈-Trialkylammonium, oder R¹³ und R¹⁴ kombiniert einen fünf- oder sechsgliedrigen gesättigten oder ungesättigten Ring komplettieren, der optional substituiert ist mit F, Cl, Br, I, Hydroxy, Carboxy, Sulfo, Phosphat, Amino, Sulfat, Phosphonat, Cyano, Nitro, Azido, C₁-C₆-Alkoxy, C₁-C₆-Alkylamino oder C₂-C₁₂-Dialkylamino oder C₃-C₁₈-Trialkylammonium, und
R¹⁵ für H oder C₁-C₂₂-Alkyl steht, das optional einmal oder mehrmals substituiert ist mit Hydroxy, Carboxy, Sulfo, Amino, C₁-C₆-Alkylamino oder C₂-C₁₂-Dialkylamino,
jedes R²¹, R²², R²³ unabhängig H, F, Cl, C₁-C₆-Alkyl, C₁-C₆-Alkyoxy-, Aryl, Aryloxy, ein heterocyclischer Stickstoff, ein Iminiumion ist; oder beliebige zwei einander benachbarte Substituenten von R²¹, R²², R²³ kombiniert eine Arylgruppe oder einen 4-, 5- oder 6-gliedrigen gesättigten oder ungesättigten Kohlenwasserstoffring bilden, der optional einmal oder mehrmals substituiert ist mit C₁-C₆-Alkyl, Halogen oder einem Carbonylsauerstoff; oder R²¹ in Kombination mit R³ oder R⁴ einen sechsgliedrigen Ring bildet, der optional mit C₁-C₆-Alkyl substituiert ist;
oder R²³, das zu Z benachbart ist, in Kombination mit R¹³ oder R¹⁴ einen sechsgliedrigen Ring bildet, der optional mit C₁-C₆-Alkyl substituiert ist;
R²⁴ H oder D entweder in R- oder in *S*-Konfiguration ist; und
n 0, 1, 2 oder 3 ist.

2. Verbindung nach Anspruch 1, wobei die Verbindung eine Strukturfomel (III) aufweist: 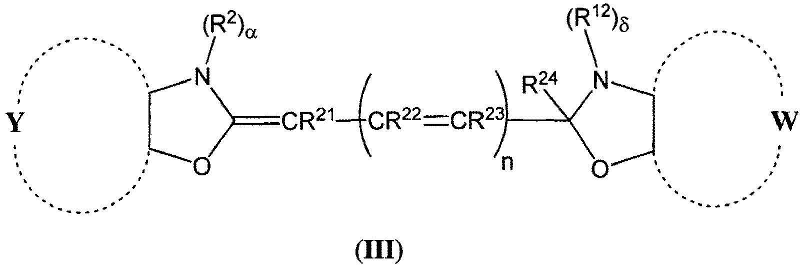 worin R²⁴ H ist und n 1 oder 2 ist.

3. Verbindung nach Anspruch 1, wobei die Verbindung eine Strukturfomel (IV) aufweist: 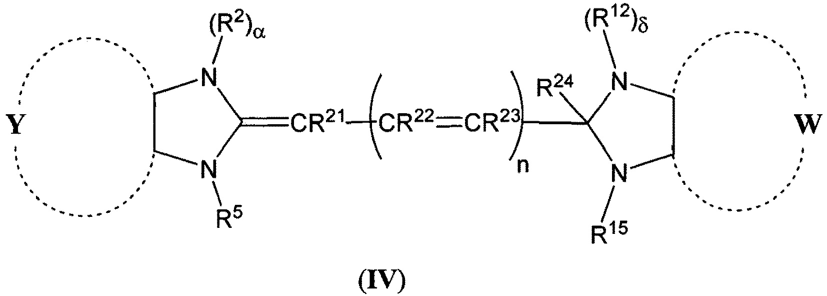 worin R²⁴ H ist und n 1 oder 2 ist.

4. Verbindung nach Anspruch 1, wobei die Verbindung eine Strukturfomel (V) aufweist: 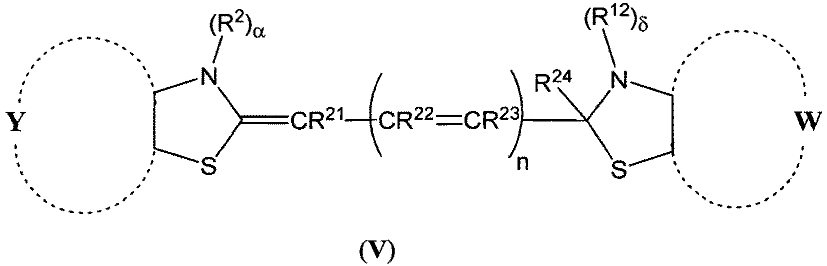 worin R²⁴ H ist und n 1 oder 2 ist.

5. Verbindung nach Anspruch 1, wobei die Verbindung eine Strukturfomel (VI) aufweist: 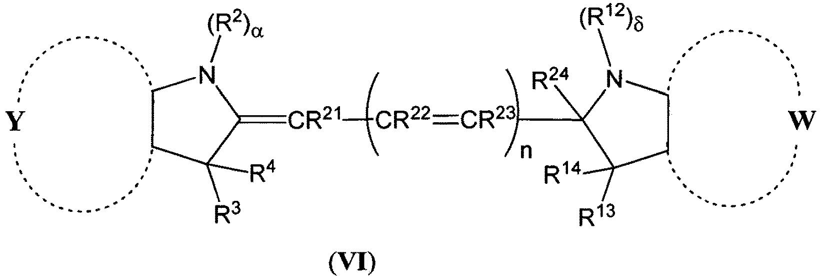 worin R²⁴ H ist und n 1 oder 2 ist.

6. Verbindung nach Anspruch 5, wobei R³, R⁴, R¹³ und R¹⁴ unabhängig C₁-C₂₂-Alkyl sind.

7. Verbindung nach Anspruch 6, wobei R² und R¹² unabhängig Methoxycarbonylalkyl, Ethoxycarbonylalkyl, Propoxycarbonylalkyl, Vinyloxycarbonylalkyl, Allyloxycarbonylalkyl, Methoxycarbonylalkenyl, Ethoxycarbonylalkenyl oder Propoxycarbonylalkenyl sind.

8. Farbstoffverbindung, ausgewählt aus der Gruppe bestehend aus:
1-4-Ethoxy-4-oxobutyl)-2,3,3-trimethyl-3*H*-indoliumbromid;
1-(4-Ethoxy-4-oxobutyl)-((1*E*,3*E*,4*E*)-5-(l-(4-ethoxy-4-oxobutyl)-3,3-dimeth ylindolin-2-yliden)penta-1,3-dienyl-3,3-dimethyl-3*H*-indoliumbromid;
1-(4-Ethoxy-4-oxobutyl)-3,3-dimetyl-2-((1*E*,3*E*,5*E*)-5-(1-(4-ethoxy-4-oxobut yl)-3,3-dimethylindolin-2-yliden)penta-1,3-dienyl)indolin;
1-(4-Ethoxy-4-oxobutyl)-2-deutero-3,3-dimetyl-2-((1*E*,3,5*E*)-5-(1-(4-ethoxy-4-oxobutyl)-3,3-dimethylindolin-2-yliden)penta-1,3-dienyl)indolin;
1-(4-Ethoxy-4-oxobutyl)-2-((1*E*,3*E*)-3-(1-4-ethoxy-4-oxobutyl)-3,3-dimethyli ndolin-2-yliden)prop-1-enyl)-3,3-dimethyl-3*H*-indoliumbromid,
1-(4-Ethoxy-4-oxobutyl)-3,3-dimethyl-2-((1*E*,3*E*)-3-(1-(4-ethoxy-4-oxobutyl )-3,3-dimethylindolin-2-yliden)prop-1-enyl)indolin;
1-(3-Carboxypropyl)-2,3,3-trimethyl-3*H*-indol-1-iumbromid,
1-(4-(Allyloxy)-4-oxobutyl)-2,3,3-trimethyl-3H-indol-1-iumbromid;
1-(4-(Allyloxy)-4-oxobutyl)-2-((1*E*,3*E*)-3-(l-(4-(allyloxy)-4-oxobutyl)-3,3-dim ethylindolin-2-yliden)prop-1-en-1-yl)-3,3-dimethyl-3*H-*indol-1-iumbromid;
Allyl-4-((*E*)-2-((*E*)-3-(1-(4-(allyloxy)-4-oxobutyl)-3,3-dimethylindolin-2-yl)ally liden)-3,3-dimethylindolin-1-yl)butanoat;
(*E*)-1-(4-Ethoxy-4-oxobut-2-en-1-yl)-2,3,3-trimethyl-3*H*-indol-1-iumbromid;
1-((*E*)-4-4-Ethoxy-4-oxobut-2-en-1-yl)-2-((1*E*,3*E*)-3-(1-((*E*)-4-ethoxy-4-oxo but-2-en-1-yl)-3,3-dimethylindolin-2-yliden)prop-1-en1-yl)-3,3-dimethyl-3*H*-i ndol-1-iumbromid; (*E*)-Ethyl
4-((*E*)-2-((*E*)-3-(1-((*E*)-4-ethoxy-4-oxobut-2-en-1-yl)-3,3-dimethylindolin-2-y l)-allyliden)-3,3-dimethylindolin-1-yl)but-2-enoat;
1-((*E*)-4-Ethoxy-4-oxobut-2-en-1-yl)-2-((1*E*,3*E*,5*E*)-5-(1-((*E*)-4-ethoxy-4-ox obut-2-en-1-yl)-3,3-dimethylindolin-2-yliden)penta-1,3-dien-1-yl)-3,3-dimet hyl-3*H*-indol-1-iumbromid;
(*E*)-Ethyl-4-((*E*)-2-((2*E*,4*E*)-5-(1-((*E*)-4-ethoxy-4-oxobut-2-en-1-yl)-3,3-dim ethylindolin-2-yl)penta-2,4-dien-1-yliden)-3,3-dimethylindolin-1-yl)but-2-en oat; 1-(11-Ethoxy-11-oxoundecyl)-2,3,3-trimethyl-3*H-*indol-1-iumbromid;
1-(11-Ethoxy-11-oxou ndecyl)-2-((1*E*,3*E*)-3-(1-(11-ethoxy-11-oxoundecyl)-3,3-dimethylindolin-2-yliden)prop-1-en-1-yl)-3,3-dimethyl-3*H-*indol-1-ium; und
Ethyl-11-(2-((1*E*,3*E*)-3-(3,3-dimethyl-1-(11-oxotridecyl)indolin-2-yliden)pro p-1-en-1-yl)-3,3-dimethylindolin-1-yl)undecanoat, worin der Farbstoff in reduzierter Form vorliegt.

9. Zusammensetzung für den Nachweis radikaler Sauerstoffspezies (ROS), wobei die Zusammensetzung umfasst:
a) einen oder mehrere reduzierte Farbstoffe; und
b) einen Träger,
wobei die reduzierten Farbstoffe Verbindungen nach einem der Ansprüche 1 bis 6 sind und in einer Menge vorliegen, die wirksam ist, um nach einer Reaktion mit ROS das Vorhandensein von ROS nachzuweisen.

10. Verfahren zum Nachweisen von reaktiven Sauerstoffspezies (ROS) in einer Probe, wobei das Verfahren die folgenden Schritte umfasst:
a) Inkontaktbringen der Probe mit einer wirksamen Menge einer oder mehrerer von den reduzierten Farbstoffverbindungen nach einem der Ansprüche 1 bis 6; oder der Zusammensetzung nach Anspruch 9; und
b) Bestimmen, ob die reduzierte Farbstoffverbindung oxidiert worden ist.

11. Verfahren nach Anspruch 10, wobei die Probe Zellen, Gewebe, biologische Flüssigkeiten oder Kombinationen davon umfasst.

12. Verfahren nach Anspruch 10, wobei eine Oxidation der reduzierten Farbstoffverbindung durch Fluoreszenzspektroskopie, Fluoreszenzmikroskopie, konfokale Laserscanning-Fluoreszenzmikroskopie oder Totalreflexions-Fluoreszenzmikroskopie nachgewiesen wird.

13. Verfahren nach Anspruch 10, wobei der Nachweis der reaktiven Sauerstoffspezies (ROS) verwendet wird, um eine Krankheit oder Befindlichkeitsstörung zu diagnostizieren, die ausgewählt ist aus der Gruppe bestehend aus Verletzung der Halsschlagader, Atherosklerose, Bluthochdruck, Krebs, durch Entzündung gekennzeichneten Krankheiten und Befindlichkeitsstörungen, durch Strahlung verursachter Spätschädigung von normalem Gewebe; Gewebeschäden aufgrund von Chemotherapie, Reperfusion nach Ischämie oder Transplantation; Diabetes, wie Typ-1-Diabetes (T1 D), neurodegnerativen Krankheiten, wie Alzheimer-Krankheit, Parkinson-Krankheit, amyotropher Lateralsklerose (ALS) und Huntington-Krankheit; Erkrankung der Hirngefäße, Mukoviszidose, chronischer Nierenkrankheit, kardiovaskulärer Krankheit, Präeklampsie, Augenkrankheiten und Kombinationen davon.

14. Kit zum Nachweisen von reaktiven Sauerstoffspezies (ROS) in einer Probe, wobei das Kit umfasst:
a) eine oder mehrere reduzierte Farbstoffverbindungen nach einem der Ansprüche 1 bis 6; oder die Zusammensetzung nach Anspruch 9; und
b) einen oder mehrere Behälter.

15. Kit nach Anspruch 14, wobei das Kit ferner Anweisungen für die Durchführung eines Assays zum Nachweisen einer oder mehrerer reaktiver Sauerstoffspezies (ROS) umfasst.

16. Verfahren zum Herstellen einer reduzierten Farbstoffverbindung mit einer Strukturformel (I): 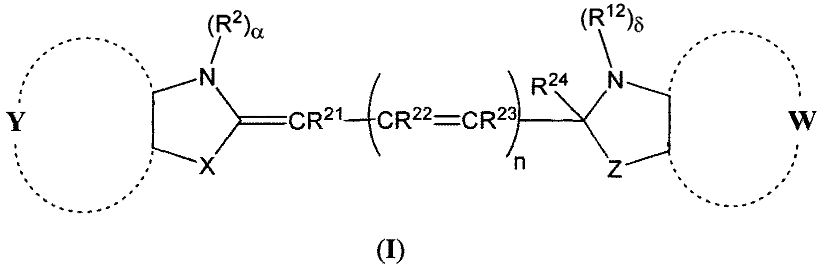 wobei das Verfahren umfasst:
a) Umsetzen einer Cyaninfarbstoffverbindung der Strukturformel (II): 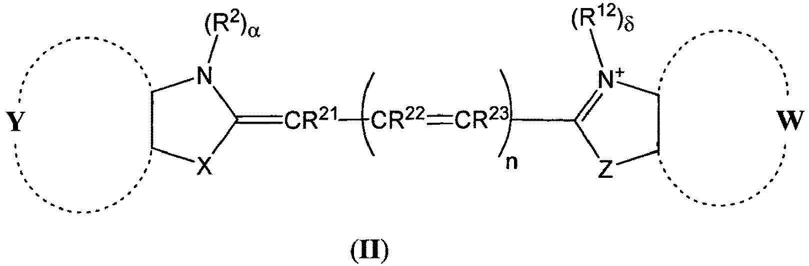 mit NaBH₄ oder NaBD₄, wobei:
W, X, Y, Z, R², R¹², R²¹, R²², R²³, R²⁴, n, α, und δ wie in Anspruch 1 definiert sind.

## Revendications

1. Composé réduit de colorant de formule structurale (**I**) : 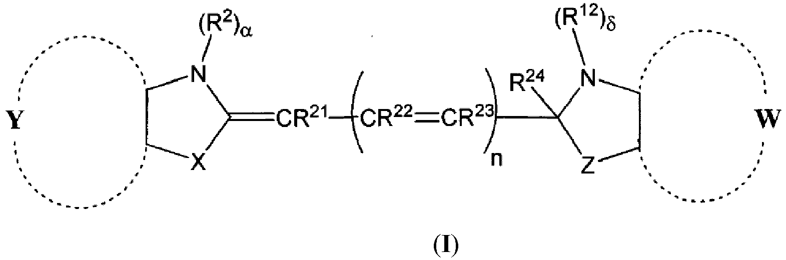 dans laquelle
Y représente les atomes nécessaires pour former un ou deux cycles aromatiques fusionnés comportant 6 atomes dans chaque cycle, lesdits atomes Y étant choisis dans l'ensemble constitué de -CH, -C, -CR¹ et -N(R²)*_{β}*, où *β* vaut 0 ou 1, mais où pas plus d'un desdits atomes dans Y ne représente -N(R²)*_{β}*, et chaque R¹ représente indépendamment un groupe amino, sulfo, trifluorométhyle, hydroxyle, halogéno, carboxy, alkyle en C₁₋₆, alcoxy en C₁₋₆, alkylamino en C₁₋₆ ou dialkylamino en C₂₋₁₂, dont chaque portion alkyle est éventuellement substituée par des substituants choisis parmi le groupe constitué de carboxy, sulfo, amino et hydroxy ;
α vaut 1 et *α* + *β* = 1 ou 2 ;
W représente les atomes nécessaires pour former un ou deux cycles aromatiques fusionnés comptant 6 atomes dans chaque cycle, lesdits atomes W étant choisis dans l'ensemble constitué de -CH, -C, -CR^{1'} et -N(R¹²)_{*β*'}, où *β*' vaut 0 ou 1, mais pas plus d'un desdits atomes en W ne représente -N(R¹²)*_{β'}*, et chaque R^{1'} représente indépendamment amino, sulfo, trifluorométhyle, hydroxyle, halogéno, carboxy, alkyle en C₁₋₆, alcoxy en C₁₋₆, alkylamino en C₁₋₆ ou dialkylamino en
C₂₋₁₂, dont chaque portion alkyle est éventuellement substituée par des substituants choisis parmi le groupe constitué de carboxy, sulfo, amino et hydroxy ; δ vaut 1 et δ + *β*' = 1 ou 2;
R² et R¹² représentent indépendamment alcoxycarbonylalkyle, alcoxythiocarbonylalkyle, thioalcoxycarbonylalkyle, alcénoxycarbonalyalkyle, alcénoxythiocarbonylalkyle, thioalcénoxycarbonylalkyle, alcocycarbonalyalcényle, alcoxycarbonylalcényle, thioalcoxycarbonylalcényle, dont chaque portion alkyle ou alcényle représente un alkyle en C₁₋₂₂ ou un alcényle qui incorpore éventuellement jusqu'à six hétéroatomes, choisis parmi N, O et S, et dont chaque portion d'alkyle est éventuellement substituée au moins une fois par F, Cl, Br, I, hydroxy, carboxy, sulfo, phosphate, amino, sulfate, phosphonate, cyano, nitro, azido, alkoxy en C₁₋₆, alkylamino en C₁₋₆, dialkylamino en C₂₋₁₂ ou trialkylammonium en C₃₋₁₈ ;
X représente O, S, Se, -CR³R⁴ ou -NR⁵, dans lequel
R³ et R⁴ représentent indépendamment un alkyle en C₁₋₂₂ ou un arylalkyle en C₇₋₂₂, dont chaque portion incorpore éventuellement jusqu'à six hétéroatomes choisis parmi N, O et S, et dont chaque portion alkyle est éventuellement substituée au moins une fois par F, Cl, Br, I, hydroxy, carboxy, sulfo, phosphate, amino, sulfate, phosphonate, cyano, nitro, azido, alcoxy en C₁₋₆, alkylamino en C₁₋₆ ou dialkylamino en C₂₋₁₂ ou trialkylammonium en C₃₋₁₈; ou R³ et R⁴ pris en combinaison complètent un cycle saturé ou insaturé à cinq ou à six membres qui est éventuellement substitué par F, Cl, Br, I, hydroxy, carboxy, sulfo, phosphate, amino, sulfate, phosphonate, cyano, nitro, azido, alcoxy en C₁₋₆, alkylamino en C₁₋₆ ou dialkylamino en C₂₋₁₂ ou trialkylammonium en C₃₋₁₈, et
R⁵ représente H ou un alkyle en C₁₋₂₂ qui est éventuellement substitué au moins une fois par hydroxy, carboxy, sulfo, amino, alkylamino en C₁₋₆ ou dialkylamino en C₂₋₁₂ ;
Z représente O, S, Se, -CR¹³R¹⁴ ou -NR¹⁵, dans lequel
R¹³ et R¹⁴ représentent indépendamment un alkyle en C₁₋₂₂ ou un arylakyle en C₇₋₂₂, dont chaque portion alkyle incorpore éventuellement jusqu'à six hétéroatomes, choisis parmi N, O et S, et dont chaque portion alkyle est éventuellement substituée au moins une fois par F, Cl, Br, I, hydroxy, carboxy, sulfo, phosphate, amino, sulfate, phosphonate, cyano, nitro, azido, alcoxy en C₁₋₆, alkylamino en C₁₋₆ ou dialkylamino en C₂₋₁₂, ou trialkylammonium en C₃₋₁₈; ou R¹³ et R¹⁴ pris en combinaison complètent un cycle saturé ou insaturé à cinq ou à six membres qui est éventuellement substitué par F, Cl, Br, I, hydroxy, carboxy, sulfo, phosphate, amino, sulfate, phosphonate, cyano, nitro, azido, alcoxy en C₁₋₆, alkylamino en C₁₋₆ ou dialkylamino en C₂₋₁₂ ou trialkylammonium en C₃₋₁₈; et
R¹⁵ représente H ou un alkyle en C₁₋₂₂ qui est éventuellement substitué au moins une fois par hydroxy, carboxy, sulfo, amino, alkylamino en C₁₋₆ ou dialkylamino en C₂₋₁₂ ; chacun de R²¹, R²², R²³ représente indépendamment H, F, Cl, alkyle en C₁₋₆, alcoxy en C₁₋₆, aryle, aryloxy, un hétérocycle azoté, un ion iminium ; ou deux substituants adjacents quelconques de R²¹, R²², R²³, pris en combinaison, forment un groupe aryle ou un cycle hydrocarboné saturé ou insaturé à 4, 5 ou 6 membres qui est éventuellement substitué au moins une fois par un alkyle en C₁₋₆, un halogène ou un carbonyle oxygéné ; ou R²¹, pris en combinaison avec soit R³ soit R⁴ forme un cycle à six membres qui est éventuellement substitué par un alkyle en C₁₋₆ ; ou R²³ adjacent à Z, pris en combinaison avec soit R¹³ soit R¹⁴, forme un cycle à six membres qui est éventuellement substitué par un alkyle en C₁₋₆ ; R²⁴ représente H ou D dans la configuration R ou S ; et
n vaut 0, 1, 2 ou 3.

2. Composé selon la revendication 1, le composé répondant à la formule structurale (**III**) : 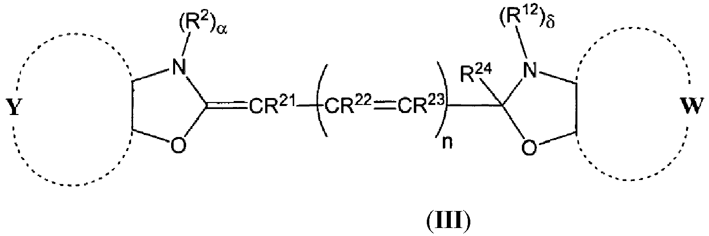 dans laquelle R²⁴ représente H et où n vaut 1 ou 2.

3. Composé selon la revendication 1, le composé répondant à la formule structurale (**IV**) : 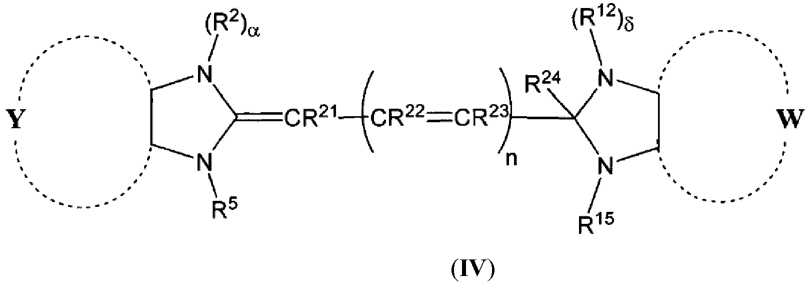 dans laquelle R²⁴ représente H et où n vaut 1 ou 2.

4. Composé selon la revendication 1, le composé répondant à la formule structurale (**V**) : 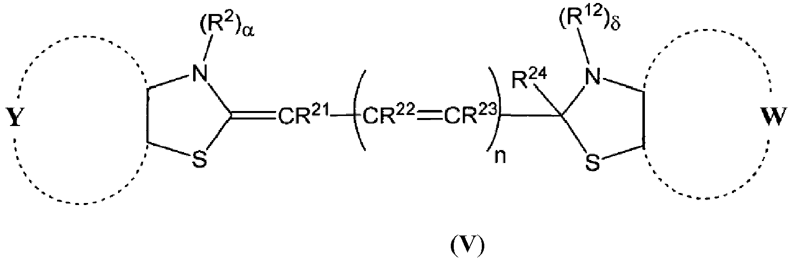 dans laquelle R²⁴ représente H et où n vaut 1 ou 2.

5. Composé selon la revendication 1, le composé répondant à la formule structurale (**VI**) : 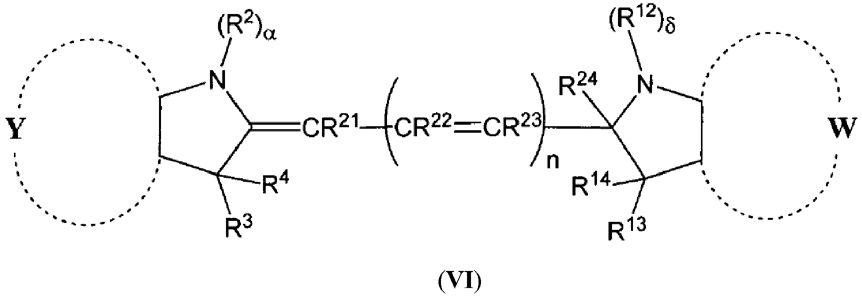 dans laquelle R²⁴ représente H et où n vaut 1 ou 2.

6. Composé selon la revendication 5, dans lequel R³, R⁴, R¹³ et R¹⁴ représentent indépendamment un alkyle en C₁₋₂₂.

7. Composé selon la revendication 6, dans lequel R² et R¹² représentent indépendamment un méthoxycarbonylalkyle, un éthoxycarbonylalkyle, un propoxycarbonylalkyle, un vinyloxycarbonylalkyle, un allyloxycarbonylalkyle, un méthoxycarbonylalcényle, un éthoxycarbonylalcényle ou un propoxycarbonylalcényle.

8. Composé de colorant choisi dans l'ensemble constitué de :
bromure de 1-(4-éthoxy-4-oxobutyl)-2,3,3-triméthyl-3*H-*indolium ;
bromure de 1-(4-éthoxy-4-oxobutyl)-((1*E*,3*E*,4*E*)-5-(1-(4-éthoxy-4-oxobutyl)-3,3-diméthylindolin-2-ylidène)penta-1,3-diényl-3,3-diméthyl-3*H*-indolium;
1-(4-éthoxy-4-oxobutyl)-3,3-diméthyl-2-((1*E*,3*E*,5*E*)-5-(1-(4-éthoxy-4-oxobutyl)-3,3-diméthylindolin-2-ylidène)penta-1,3-diényl)indoline ;
1-(4-éthoxy-4-oxobutyl)-2-deutéro-3,3-diméthyl-2-((1*E*,3*E*,5*E*)-5-(1-(4-éthoxy-4-oxobutyl)-3,3-diméthylindolin-2-ylidène)penta-1,3-diényl)indoline ;
bromure de 1-(4-éthoxy-4-oxobutyl)-2-((1*E*,3*E*)-3-(1-4-éthoxy-4-oxobutyl)-3,3-diméthylindolin-2-ylidène)prop-1-ényl)-3,3-diméthyl-3*H-*indolium ;
1-(4-éthoxy-4-oxobutyl)-3,3-diméthyl-2-((1*E*,3*E*)-3-(1-(4-éthoxy-4-oxobutyl)-3,3-diméthylindolin-2-ylidène)prop-1-ényl)indoline ;
bromure de 1-(3-carboxypropyl)-2,3,3-triméthyl-3*H-*indol-1-ium ;
bromure de 1-(4-(allyloxy)-4-oxobutyl)-2,3,3-triméthyl-3*H-*indol-1-ium ;
bromure de 1-(4-allyloxy-4-oxobutyl)-2-((1*E*,3*E*)-3-(1-(4-(allyloxy)-4-oxobutyl)-3,3-diméthylindolin-2-ylidène)prop-1-én-1-yl)-3,3-diméthyl-3*H*-indol-1-ium ;
butanoate d'allyl 4-((*E*)-2-((*E*)-3-(1-(4-(allyloxy)-4-oxobutyl)-3,3-diméthylindolin-2-yl)allylidène)-3,3-diméthylindolin-1-yle) ;
bromure de (*E*)-1-(4-éthoxy-4-oxobut-2-én-yl)-2,3,3-triméthyl-3*H-*indol-1-ium ;
bromure de 1-((*E*)-4-éthoxy-4-oxobut-2-én-1-yl)-2-((1*E*,3*E*)-3-(1-((*E*))-4-éthoxy-4-oxobut-2-én-1-yl)-3,3-diméthylindolin-2-ylidène)prop-1-ényl)-3,3-diméthyl-3*H-*indol-1-ium ;
but-2-énoate de (*E*)-éthyl 4-((*E*)-2-((*E*)-3-(1-((*E*)-4-éthoxy-4-oxobut-2-én-1-yl)-3,3-diméthylindolin-2-yl)allylidène)-3,3-diméthylindolin-1-yle) ;
bromure de 1-((*E*)-4-éthoxy-4-oxobut-é-én-1-yl)-2-((1*E*,3*E*,5*E*)-5-(1-((*E*)-4-éthoxy-4-oxobut-2-én-1-yl)-3,3-diméthylindolin-2-ylidène)penta-1,3-dién-1-yl)-3,3-diméthyl-3*H-*indol-1-ium ;
but-2-énoate de (*E*)-éthyl 4-((*E*)-2-((2*E*,4*E*)-5-(1-((*E*)-4-éthoxy-4-oxobut-2-én-1-yl)-3,3-diméthylindolin-2-yl)penta-2,4-dién-1-ylidène)-3,3-diméthylindolin-1-yle) ;
bromure de 1-(11-éthoxy-11-oxo-undécyl)-2,3,3-triméthyl-3*H*-indol-1-ium ;
1-(11-éthoxy-11-oxo-undécyl)-2-((1*E*,3*E*)-3-(1-(11-éthoxy-11-oxo-undécyl)-3,3-diméthylindolin-2-ylidène)prop-1-én-1-yl)-3,3-diméthyl-3*H-*indol-1-ium ; et
undécanoate d'éthyl 11-(2-((1*E*,3*E*)-3-(3,3-diméthyl-1-(11-oxotridécyl)indolin-2-ylidène)prop-1-én-1-yl)-3,3-diméthylindolin-1-yle), le composé de colorant étant présent sous sa forme réduite.

9. Composition destinée à la détection d'espèces oxygénées radicalaires (ROS), la composition comprenant :
a) au moins un colorant réduit ; et
b) un véhicule,
dans laquelle lesdits colorants réduits sont des composés conformes à l'une quelconque des revendications 1 à 6 et sont présents en quantité efficace pour détecter la présence de ROS lors d'une réaction avec des ROS.

10. Procédé de détection d'espèces oxygénées réactives (ROS) dans un échantillon, le procédé comprenant les étapes suivantes :
a) mise en contact de l'échantillon avec une quantité efficace d'au moins un composé de colorant réduit conforme à l'une quelconque des revendications 1 à 6 ; ou la composition conforme à la revendication 9 ; et
b) détermination si le composé de colorant réduit a été oxydé.

11. Procédé selon la revendication 10, dans lequel l'échantillon contient des cellules, des tissus, des fluides biologiques ou leurs combinaisons.

12. Procédé selon la revendication 10, dans lequel l'oxydation du composé de colorant réduit est détectée par spectroscopie par fluorescence, par microscopie par fluorescence, par microscopie à fluorescence à balayage au scanner homofocal, ou par microscopie à fluorescence à réflexion interne totale.

13. Procédé selon la revendication 10, dans lequel la détection des espèces oxygénées réactives (ROS) sert à diagnostiquer une maladie ou un trouble choisi dans l'ensemble constitué des lésions de l'artère carotide, de l'athérosclérose, de l'hypertension, des cancers, des maladies et des troubles **caractérisés par** une inflammation, un dommage tissulaire normal tardif induit par des rayonnements ; des dommages tissulaires dus à la chimiothérapie, à la reperfusion après ischémie ou à la transplantation ; des diabètes, tels que le diabète de type 1 (DT1), des maladies neurodégénératives telles que la maladie d'Alzheimer, la maladie de Parkinson, la sclérose latérale amyotrophique (SLA) et la maladie de Huntington ; d'une maladie cérébrovasculaire, d'une fibrose kystique, d'une maladie rénale chronique, d'une maladie cardiovasculaire, d'un éclampsisme, de maladies ophtalmiques et de leurs combinaisons.

14. Kit de détection d'espèces oxygénées réactives (ROS) dans un échantillon, le kit comprenant :
a) au moins un composé réduit de colorant conforme à l'une quelconque des revendications 1 à 6 ; ou la composition conforme à la revendication 9 ; et
b) au moins un récipient.

15. Kit selon la revendication 14, le kit comprenant en outre des instructions permettant d'effectuer un essai servant à détecter au moins une espèce oxygénée réactive (ROS).

16. Procédé de préparation d'un composé de colorant réduit de formule structurale (**I**) 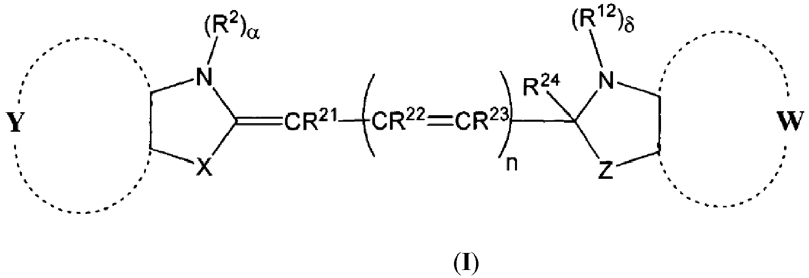 le procédé comprenant :
a) la réaction d'un composé de colorant de type cyanine de formule structurale (**II**) 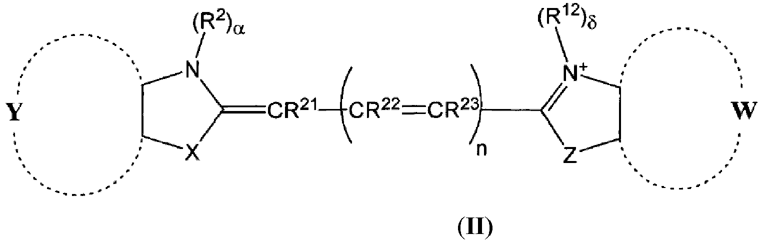 avec NaBH₄ ou NaBD₄,
W, X, Y, Z, R², R¹², R²¹, R²², R²³, R²⁴, n, α et δ étant tels que définis à la revendication 1.
